# EUROPEAN PATENT SPECIFICATION

(11) **EP 3 745 757 B1**
(45) Date of publication and mention of the grant of the patent: **25.03.2026**
(21) Application number: 19753947.1
(22) Date of filing: 21.01.2019
(51) Int. Cl.: H04W 12/06, H04L 9/40

(54) **COMMUNICATION METHOD AND COMMUNICATION APPARATUS**
KOMMUNIKATIONSVERFAHREN UND KOMMUNIKATIONSVORRICHTUNG
PROCÉDÉ ET APPAREIL DE COMMUNICATION

(30) Priority: 13.02.2018 CN 201810150774
(43) Date of publication of application: 02.12.2020
(73) Proprietor: HUAWEI TECHNOLOGIES CO., LTD., Shenzhen, Guangdong 518129 (CN)
(72) Inventor: YING, Jiangwei, Shenzhen, Guangdong 518129 (CN); TAN, Shiyong, Shenzhen, Guangdong 518129 (CN); YANG, Yanmei, Shenzhen, Guangdong 518129 (CN)
(74) Representative: Gill Jennings & Every LLP
(86) International application number: PCT/CN2019/072529
(87) International publication number: WO 2019/157909

(56) References cited:
- CN-A- 104 267 958
- CN-A- 106 912 047
- CN-A- 107 579 948
- CN-A- 107 637 019
- US-A1- 2013 012 165
- ERICSSON: "Solution: Network access for credentials provisioning using external AUSF/ARPF", vol. SA WG3, no. Busan; 20170327 - 20170331, 27 March 2017 (2017-03-27), XP051248504, Retrieved from the Internet <URL:http://www.3gpp.org/ftp/Meetings_3GPP_SYNC/SA3/Docs/> [retrieved on 20170327]
- NOKIA ET AL: "Network Slice access subscription management by a third party", vol. SA WG2, no. Sophia Antipolis, France; 20170821 - 20170825, 21 August 2017 (2017-08-21), XP051325542, Retrieved from the Internet <URL:http://www.3gpp.org/ftp/Meetings_3GPP_SYNC/SA2/Docs/> [retrieved on 20170821]
- NOKIA: "Network Slice access subscription management by a third party", SA WG2 MEETING #122BIS S2-175693, 25 August 2017 (2017-08-25), XP051325542

## Description

### TECHNICAL FIELD

This application relates to the communications field, and in particular, to a communication method and a communications apparatus.

### BACKGROUND

In a mobile communications system, to ensure system security, a terminal may perform mutual authentication, at a network layer, with a network side device by using a security credential. After the authentication succeeds, the terminal performs service communication with the network side device. In a 4G communications network, a security credential may be a universal integrated circuit card (Universal Integrated Circuit Card, UICC) card installed on the terminal, and the terminal may perform security authentication, for example, evolved packet system (Evolved Packet System, EPS) authentication and key agreement (authentication and key agreement, AKA) security authentication, with the network side device based on a USIM in the UICC card. The security authentication may be referred to as local authentication, or may be referred to as network layer authentication.

With development of communications technologies, some innovative application scenarios appear, for example, machine type communication (machine type communication, MTC), industrial control, an intelligent transportation system (intelligent transportation system, ITS), and the like. Accordingly, in these scenarios, some low-cost, simple-structure terminals appear, such as an IoT device in which the UICC card does not need to be installed, and the security authentication that is based on the network layer cannot meet a requirement.

"Solution: Network access for credentials provisioning using external AUSF/ARPF", 3GPP Draft, 27 March 2017 addresses remote credential provisioning for IoT devices.
"Network Slice access subscription management by a third party", 3GPP Draft, 21 August 2017, discusses the topic of allowing a third party to perform subscription management of the Users allowed to access a slice it rents from an operator.
US 2013/0012165 Al provides a method and apparatus for attaching a wireless device to a foreign wireless domain of a 3GPP communication system using an alternative authentication mechanism.

### SUMMARY

Embodiments of this application provide a communication method and a communications apparatus, to implement a purpose that a terminal can perform normal communication without local authentication.

According to a first aspect, a communication method is provided in accordance with appended claim 1. In this case, after authentication is performed between the terminal and a third party, even if local authentication is not performed, the terminal may access the network for communication after third-party authentication is performed.

With reference to the first aspect, in a first implementation of the first aspect, to provide flexibility of the solution, a plurality of manners may be provided to make the mobility management network element determine to perform third-party authentication on the terminal. For example, when the request message includes indication information used to indicate to perform third-party authentication on the terminal, the mobility management network element determines to perform third-party authentication on the terminal. For another example, when the request message includes an application identifier, the mobility management network element determines to perform third-party authentication on the terminal. For another example, when the request message includes an identifier of the terminal, and an authentication manner corresponding to the identifier of the terminal is performing third-party authentication on the terminal, the mobility management network element determines to perform third-party authentication on the terminal.

With reference to the first implementation of the first aspect, in a second implementation of the first aspect, the request message further includes a user identifier; or the request message further includes a user identifier and an application container, and the application container is configured to perform third-party authentication on the terminal. For example, the application container is transmitted to an application server through the request message carrying the application container. On one hand, the application server may be prevented from requesting the application container from the terminal, thereby reducing signaling interworking between the application server and the terminal. On the other hand, the mobility management network element may send the application container to the application server, so that the application server can perform third-party authentication on the terminal based on the application container.

With reference to the first implementation of the first aspect, in a third implementation of the first aspect, the method further includes: The mobility management network element sends a response message to the terminal based on the request message, where the response message includes indication information used to indicate the terminal to send information by using a control plane. Further, the mobility management network element receives a user identifier by using the control plane. In this case, the terminal may send the user identifier by using the control plane, thereby avoiding a sending failure of the terminal.

With reference to the third implementation of the first aspect, in a fourth implementation of the first aspect, the method further includes: The mobility management network element receives an application container by using the control plane, where the application container is configured to perform third-party authentication on the terminal. In this case, the terminal may send the application container by using the control plane, thereby avoiding a sending failure of the terminal.

With reference to the first aspect, in a fifth implementation of the first aspect, the determining, by the mobility management network element based on the request message, to perform third-party authentication on the terminal includes: When the request message includes a user identifier, the mobility management network element determines to perform third-party authentication on the terminal. In this case, the mobility management network element may determine, in a simple manner, to perform third-party authentication on the terminal.

With reference to the fifth implementation of the first aspect, in a sixth implementation of the first aspect, the request message further includes an application container, and the application container is configured to perform third-party authentication on the terminal. For example, the application container is transmitted to an application server through the request message carrying the application container. On one hand, the application server may be prevented from requesting the application container from the terminal, thereby reducing signaling interworking between the application server and the terminal. On the other hand, the mobility management network element may send the application container to the application server, so that the application server can perform third-party authentication on the terminal based on the application container.

With reference to any one of the second implementation of the first aspect to the sixth implementation of the first aspect, in a seventh implementation of the first aspect, to improve flexibility of the solution, the mobility management network element may send the user identifier to the application server by using an AUSF network element or a NEF network element.

According to a second aspect, a communication method is provided in accordance with appended claim 4. The method provides a new authentication manner, so that the terminal may access a network after third-party authentication succeeds, thereby resolving a problem that the terminal cannot access the network without local authentication.

With reference to the second aspect, in a first implementation of the second aspect, the authentication reference information includes indication information or an application identifier used to indicate to perform third-party authentication on the terminal. The mobility management network element may determine, based on the indication information or the application identifier, to perform third-party authentication on the terminal. In this case, flexibility of the solution can be improved.

With reference to the first implementation of the second aspect, in a second implementation of the second aspect, the request message further includes a user identifier, so that an application server may perform authentication on the terminal based on the user identifier.

With reference to the second aspect, in a third implementation of the second aspect, the authentication reference information includes a user identifier. In this case, the mobility management network element may determine, based on the user identifier, to perform third-party authentication on the terminal.

With reference to the second implementation of the second aspect or the third implementation of the second aspect, in a fourth implementation of the second aspect, the request message further includes an application container, and the application container is configured to perform third-party authentication on the terminal. For example, the application container is transmitted to the application server through the request message carrying the application container. On one hand, the application server may be prevented from requesting the application container from the terminal, thereby reducing signaling interworking between the application server and the terminal. On the other hand, the application server can perform authentication on the terminal based on the application container.

With reference to the first implementation of the second aspect, in a fifth implementation of the second aspect, the response message includes indication information used to indicate the terminal to send information by using a control plane, and the method further includes: The terminal sends a user identifier to the mobility management network element by using the control plane. In this case, the terminal may send the user identifier by using the control plane, thereby avoiding a sending failure of the terminal.

With reference to the fifth implementation of the second aspect, in a sixth implementation of the second aspect, the method further includes: The terminal sends an application container to the mobility management network element by using a control plane, where the application container is configured to perform third-party authentication on the terminal. Further, the mobility management network element may transmit the application container to an application server, so that the application server may perform third-party authentication on the terminal based on the application container.

According to a third aspect, a communications apparatus is provided in accordance with appended claim 6.

According to a fourth aspect, a computer-readable storage medium is provided in accordance with appended claim 7.

### BRIEF DESCRIPTION OF DRAWINGS

FIG. 1 is a schematic structural diagram of a communications system to which an embodiment of this application is applicable;
FIG. 2 is a schematic flowchart of a communication method according to an embodiment of this application;
FIG. 3A and FIG. 3B are a schematic flowchart of another communication method according to an embodiment of this application;
FIG. 4A, FIG. 4B, and FIG. 4C are a schematic flowchart of another communication method according to an embodiment of this application;
FIG. 5A and FIG. 5B are a schematic flowchart of another communication method according to an embodiment of this application;
FIG. 6A and FIG. 6B are a schematic flowchart of another communication method according to an embodiment of this application;
FIG. 7A and FIG. 7B are a schematic flowchart of another communication method according to an embodiment of this application;
FIG. 8 is a schematic flowchart of another communication method according to an embodiment of this application;
FIG. 9 is a schematic structural diagram of a mobility management network element according to an embodiment of this application;
FIG. 10 is a schematic structural diagram of a terminal according to an embodiment of this application;
FIG. 11 is a schematic structural diagram of a communications apparatus according to an embodiment of this application;
FIG. 12 is a schematic structural diagram of a communications apparatus according to an embodiment of this application;
FIG. 13 is a schematic structural diagram of a communications apparatus according to an embodiment of this application;
FIG. 14 is a schematic structural diagram of another communications apparatus according to an embodiment of this application;
FIG. 15 is a schematic structural diagram of another communications apparatus according to an embodiment of this application;
FIG. 16 is a schematic structural diagram of another communications apparatus according to an embodiment of this application;
FIG. 17 is a schematic structural diagram of another communications apparatus according to an embodiment of this application;
FIG. 18 is a schematic structural diagram of another communications apparatus according to an embodiment of this application; and
FIG. 19 is a schematic structural diagram of a communications system according to an embodiment of this application.

### DESCRIPTION OF EMBODIMENTS

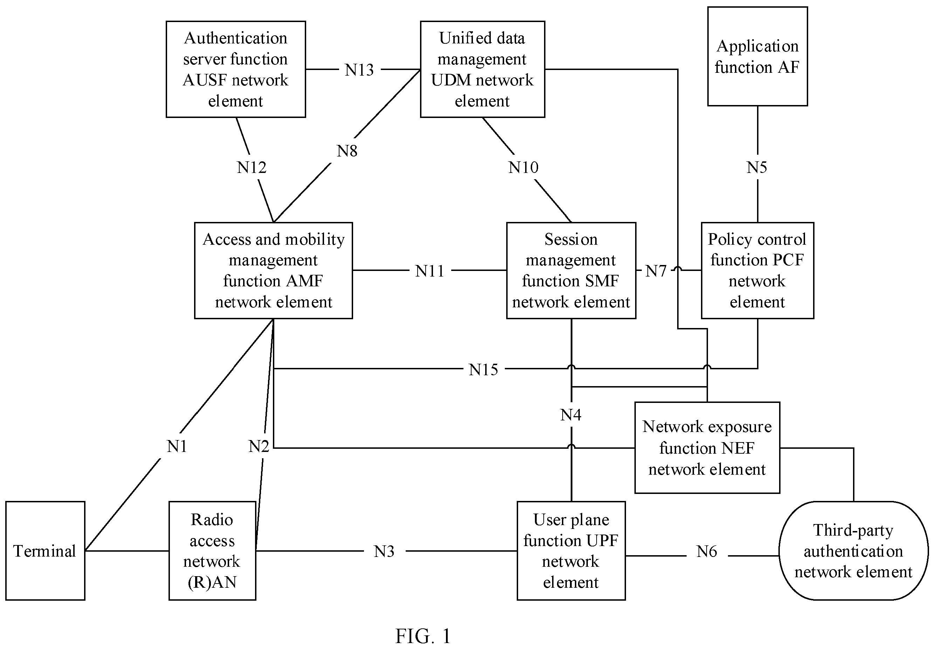

FIG. 1 is an example of a schematic structural diagram of a 5G communications system to which an embodiment of this application is applicable, and a structure of the communications system may be applied to a next-generation communications system. The following briefly describes components shown in FIG. 1.

A terminal may include various handheld devices, vehicle-mounted devices, wearable devices, or computing devices that have a wireless communication function, another processing device connected to a wireless modem, or terminals in various forms such as a mobile station (mobile station, MS), a terminal (terminal), user equipment (user equipment, UE), and a software terminal, for example, a water meter, an electricity meter, a sensor, a mobile phone, an iPad, and the like.

A radio access network (radio access network, RAN) may be a network including a 5G-RAN node, to implement a radio physical layer function, resource scheduling, radio resource management, radio access control, and a mobility management function. For example, a 5G-RAN is connected to a UPF network element through a user plane interface N3, and is configured to transmit data of a terminal. The 5G-RAN establishes a control plane signaling connection to an access and mobility management function (Access and Mobility Management Function, AMF) network element through a control plane interface N2, to implement a function such as radio access bearer control.

An authentication server function (authentication server function, AUSF) network element is configured to ensure security authentication between a terminal and a network.

An AMF network element is responsible for mobility management, access management, and the like, and is configured to implement another function other than session management in functions of a mobility management entity (mobility management entity, MME) in a 4G system. For example, the AMF network element is responsible for maintaining and managing status information of a terminal, responsible for performing authentication on the terminal, selects a network slice, or selects a session management function (session management function, SMF) network element.

An SMF network element establishes a session for a terminal, allocates an IP address of the session, and manages or terminates the session; selects a user plane function (User plane function, UPF) network element; and selects a network exposure function (network exposure function, NEF) network element.

A NEF network element is responsible for connecting an SMF network element and an external DN network, and may include a third-party authentication network element.

A UPF network element provides functions such as session and bearer management and IP address allocation, for example, the UPF network element is responsible for data packet filtering, data transmission/forwarding, rate control, and charging information generation for a terminal.

A unified data management (unified data management, UDM) network element allocates reference information to a network element, for example, allocates reference information to an SMF network element or a NEF network element.

A policy control function (Policy Control Function, PCF) network element allocates reference information to a network element, for example, allocates reference information to an SMF network element or a NEF network element.

A third-party authentication network element is a functional network element for security authentication and authorization of an external data network, and may be configured to perform security authentication and authorization check on a terminal. For example, the third-party authentication network element may be a DN device, and the DN device may be any one of a DN-AAA server, an AF, an AF-AAA, an application server (Application-Server), and an application-server-AAA. For example, the third-party authentication network element may be an application vendor such as Tencent, Alibaba, or Alipay.

It should be noted that in the embodiments of this application, an example in which the third-party authentication network element is an application server is used for description. All related application servers may be replaced with third-party authentication network elements. This is not limited.

The components shown in FIG. 1 may communicate with each other through interfaces in a next-generation network architecture. For example, the terminal may communicate with the AMF network element through an interface N1.

The solutions provided in the embodiments of this application may be applied to the 5G communications system shown in FIG. 1, may be applied to a 4G communications system, or may be applied to a 5G next-generation communications system. A network element (for example, any one of a mobility management network element, an AMF network element, an SMF network element, a NEF network element, an AUSF network element, a UPF network element, and the like) in the embodiments of this application may be a function module on a physical device, or may be an independent physical device.

It should be noted that the "network" mentioned in this application may refer to a carrier network, or may refer to a wireless communications network, which specifically includes a radio access network and a core network. The core network may be a part, other than the radio access network, of a device deployed by an operator, for example, may be an AMF network element, an SMF network element, a UPF network element, and the like. This is not limited.

The mobility management network element mentioned in this application is a network element, for example, an AMF network element or an MME network element, that has a mobility management function.

In addition, in the embodiments of this application, an example in which the third-party authentication network element is an application server is used for description. All involved application servers may be replaced with third-party authentication network elements.

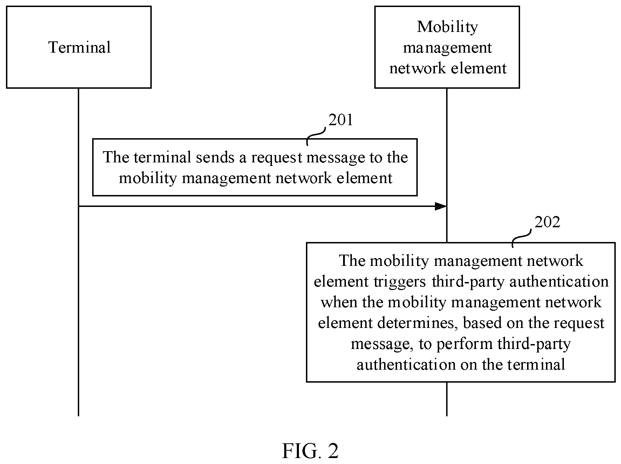

As shown in FIG. 2, an embodiment of this application provides a communication method. The method includes the following steps.
Step 201: A terminal sends a request message to a mobility management network element.

Correspondingly, the mobility management network element receives the request message from the terminal.

The request message may be used to request access to a network, and the request message may be a registration request (attach request) message.

Step 202: The mobility management network element triggers third-party authentication when the mobility management network element determines, based on the request message, to perform third-party authentication on the terminal.

Specifically, the third-party authentication in step 202 may be that a third-party authentication network element performs authentication on a user identifier and a key. If authentication performed by the third-party authentication network element on the user identifier succeeds, it is determined that third-party authentication performed by the third-party authentication network element on the terminal succeeds. If authentication performed by the third-party authentication network element on the user identifier fails, it is determined that third-party authentication performed by the third-party authentication network element on the terminal fails.

Optionally, in step 202, that the mobility management network element determines, based on the request message, to perform third-party authentication on the terminal may be replaced with: The mobility management network element determines, based on the request message, to skip performing local authentication on the terminal, or determines, based on indication information, not to perform local authentication on the terminal. For an implementation, refer to the following descriptions of the first implementation scenario. This is not limited.

According to the solution provided in the foregoing embodiment, when network authentication is not performed on the terminal, the terminal may also perform communication. This can resolve the authentication problem of a terminal without a security credential mentioned in the background, and can also resolve an authentication problem of a network access failure in a scenario, for example, a scenario in which local authentication cannot be performed on a terminal due to a reason such as suspension.

It should be noted that, when third-party authentication is performed on the terminal, local authentication may be performed or not be performed on the terminal. For example, to improve security, third-party authentication is further performed on the terminal after local authentication performed on the terminal succeeds. Dual authentication on the terminal may greatly improve network security. For another example, only third-party authentication is performed on the terminal, and the terminal can access the network after the third-party authentication succeeds. This can improve flexibility of terminal authentication, and not only resolve a problem that the terminal cannot access the network in a scenario mentioned in the background, but also resolve a problem that the terminal cannot access the network in a scenario in which roaming is not enabled.

Optionally, in a first implementation scenario of the foregoing embodiment, that the mobility management network element determines, based on the request message, to perform third-party authentication on the terminal in step 202 may include the following implementations:
Manner 1: When the request message includes indication information used to indicate to perform third-party authentication on the terminal, the mobility management network element determines to perform third-party authentication on the terminal.

The request message may include the indication information used to indicate to perform third-party authentication on the terminal. The indication information may be referred to as a limited service indication (limited service indication) or a third-party authentication indication (third party authentication indication).

Specifically, the request message may include authentication reference information, where the authentication reference information may be used by the mobility management network element to determine whether to perform third-party authentication on the terminal. The authentication reference information may include the indication information used to indicate to perform third-party authentication on the terminal. In this case, the mobility management network element may determine, in a relatively simple manner, to perform third-party authentication on the terminal.

For example, when it is determined that third-party authentication is to be performed on the terminal, the terminal may include, in the request message, the indication information used to indicate to perform third-party authentication on the terminal.

There may be a plurality of manners for determining to perform third-party authentication on the terminal. For example, an authentication manner of the terminal may be preset as a third-party authentication manner; for another example, when the terminal does not detect an available VPLMN (to be specific, the terminal cannot normally access a VPLMN network), it is determined that third-party authentication is performed on the terminal; for still another example, when a broadcast message of a VPLMN indicates that the VPLMN supports restricted access of the terminal (supporting restricted access of the terminal means supporting third-party authentication on the terminal) or third-party authentication, it is determined that third-party authentication is performed on the terminal; for yet another example, when the terminal does not detect an available VPLMN (to be specific, the terminal does not enable roaming in the VPLMN, and cannot normally access the VPLMN network), and a broadcast message of the VPLMN indicates that the VPLMN supports restricted access of UE or third-party authentication, it is determined that third-party authentication is performed on the terminal.

Manner 2: When the request message includes an application identifier, the mobility management network element determines to perform third-party authentication on the terminal.

For example, an application identifier (for example, one or more application identifiers are preset) for performing third-party authentication may be preset in the terminal. The terminal may select one application identifier from the preset application identifier that is for performing third-party authentication, send the selected application identifier to the mobility management network element by using the request message, and trigger, by using the mobility management network element, an application server corresponding to the application identifier to perform third-party authentication on the terminal.

Specifically, the request message may include authentication reference information, where the authentication reference information may be used by the mobility management network element to determine whether to perform third-party authentication on the terminal. The authentication reference information may include the application identifier. In this case, the mobility management network element may determine, in a relatively simple manner, to perform third-party authentication on the terminal.

The application identifier may be used to identify an application that performs third-party authentication.

Manner 3: When the request message includes an identifier of the terminal, and an authentication manner corresponding to the identifier of the terminal is performing third-party authentication on the terminal, the mobility management network element determines to perform third-party authentication on the terminal.

Specifically, the request message may include authentication reference information, where the authentication reference information may be used by the mobility management network element to determine whether to perform third-party authentication on the terminal. The authentication reference information may include the identifier of the terminal.

The identifier of the terminal may be used to identify the terminal, and may be a globally unique temporary identity (global unique temporary identity, GUTI), an international mobile subscriber identity (International Mobile Subscriber Identification, IMSI), a temporary identity (Temporary Mobile Subscriber Identity, TMSI), or the like.

For example, the terminal may prestore a correspondence between the identifier of the terminal and the authentication manner, and the authentication manner may include local authentication and third-party authentication. One identifier of the terminal may correspond to at least one authentication manner: One identifier of the terminal may correspond to local authentication, or one identifier of the terminal corresponds to third-party authentication, or one identifier of the terminal corresponds to local authentication and third-party authentication. For example, the terminal is a smart water meter, and third-party authentication is performed on the smart water meter. In this case, the correspondence between the identifier of the terminal and the authentication manner may include a correspondence between an identifier of the smart water meter and third-party authentication. The mobility management network element may determine, based on the correspondence between the identifier of the terminal and the authentication manner, whether to perform third-party authentication on the terminal.

For example, the mobility management network element may store a correspondence between a type of the terminal and the authentication manner. The mobility management network element first determines the type of the terminal based on the identifier of the terminal, and then determines, based on the correspondence between the type of the terminal and the authentication manner, that the authentication manner of the terminal is third-party authentication. In this case, the mobility management network element may determine, in a relatively simple manner, to perform third-party authentication on the terminal.

The identifier of the terminal may alternatively be an identifier, of the terminal, that can indicate the type of the terminal or a mobile equipment (mobile equipment, ME) identifier. There may be specifically a plurality of implementations for determining the type of the terminal, for example, determining whether the terminal belongs to an IoT type, or determining whether the terminal belongs to a preset vendor, or determining whether the terminal belongs to a preset application enterprise, or the like.

Manner 4: When the request message includes a user identifier, the mobility management network element determines to perform third-party authentication on the terminal.

Specifically, the request message may include authentication reference information, where the authentication reference information may be used by the mobility management network element to determine whether to perform third-party authentication on the terminal. The authentication reference information may include the user identifier.

The user identifier may also be referred to as an application user identifier (Application User ID). The user identifier may be allocated by an application server that performs third-party authentication. The user identifier corresponds to or is associated with the application server that performs third-party authentication.

Optionally, the foregoing Manner 1, Manner 2, Manner 3, and Manner 4 for determining to perform third-party authentication on the terminal may be separately used, or may be used in combination. When the request message includes any plurality of the identifier of the terminal, the indication information used to indicate to perform third-party authentication on the terminal, the application identifier, and the user identifier, a priority may be set for each of the foregoing Manner 1, Manner 2, Manner 3, and Manner 4 for determining whether to perform third-party authentication on the terminal. Then, information based on which third-party authentication is determined to be performed on the terminal is determined based on the priority.

It should be noted that the request message may include or may not include the user identifier.

Further, the request message may further include an application container (application container). The application container may be used by an application server to perform third-party authentication on the terminal. Optionally, the application container may also be referred to as an application security container (application security container) or a security container (security container). The application container may include some parameters used for third-party authentication, for example, key-related information (for example, a security challenge value). The key-related information may be a security challenge value generated by using a key. In an optional implementation, if the application server successfully verifies a security challenge value corresponding to the user identifier, it may be determined that third-party authentication on the terminal corresponding to the user identifier succeeds. Correspondingly, if the application server fails to verify a security challenge value corresponding to the user identifier, it may be determined that third-party authentication on the terminal corresponding to the user identifier fails.

Optionally, the mobility management network element may send the application container to the application server by using a NEF network element, an AUSF network element, or an SMF network element. The application container is transmitted to the application server through the request message carrying the application container. On one hand, the application server may be prevented from requesting the application container from the terminal, thereby reducing signaling interworking between the application server and the terminal. On the other hand, the mobility management network element may send the application container to the application server, so that the application server can perform third-party authentication on the terminal based on the application container.

In a first example, it is assumed that the request message does not include the user identifier and the application container. In this case, the foregoing method may further include: The mobility management network element sends a response message to the terminal based on the request message, where the response message includes indication information used to indicate the terminal to send information by using a control plane; the terminal sends a user identifier to the mobility management network element based on the indication information by using the control plane; and correspondingly, the mobility management network element receives the user identifier by using the control plane. For example, the terminal sends the user identifier to the mobility management network element through a non-access stratum (Non-access Stratum, NAS) message.

Further, the method may further include: The terminal sends an application container to the mobility management network element based on the indication information by using the control plane; and correspondingly, the mobility management network element receives the application container by using the control plane. For example, the terminal sends the application container to the mobility management network element through a NAS message. The user identifier and the application container may be carried in a same NAS message, or may be carried in different NAS messages. This is not limited.

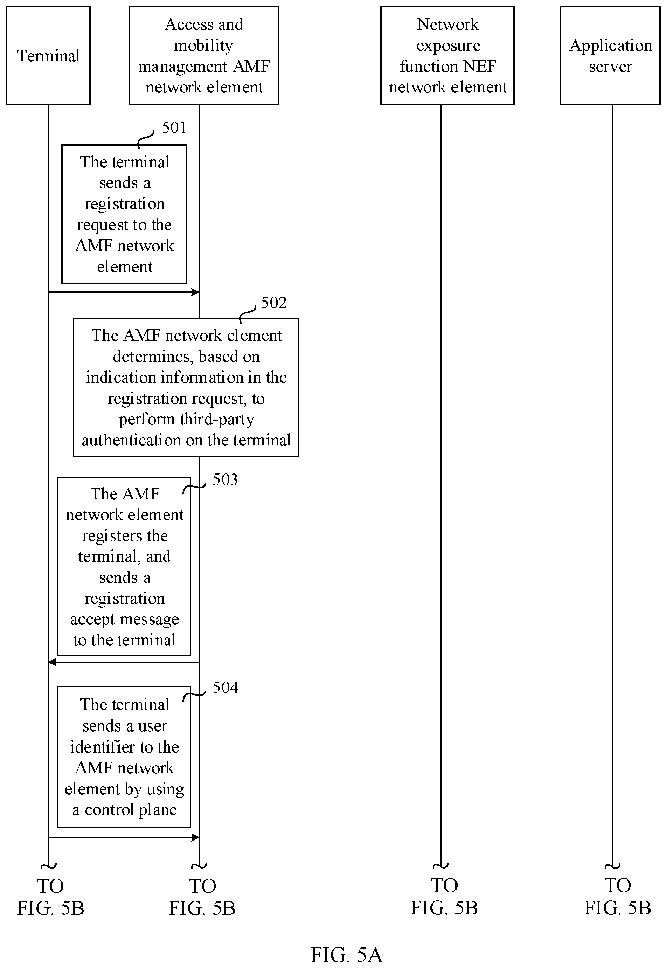

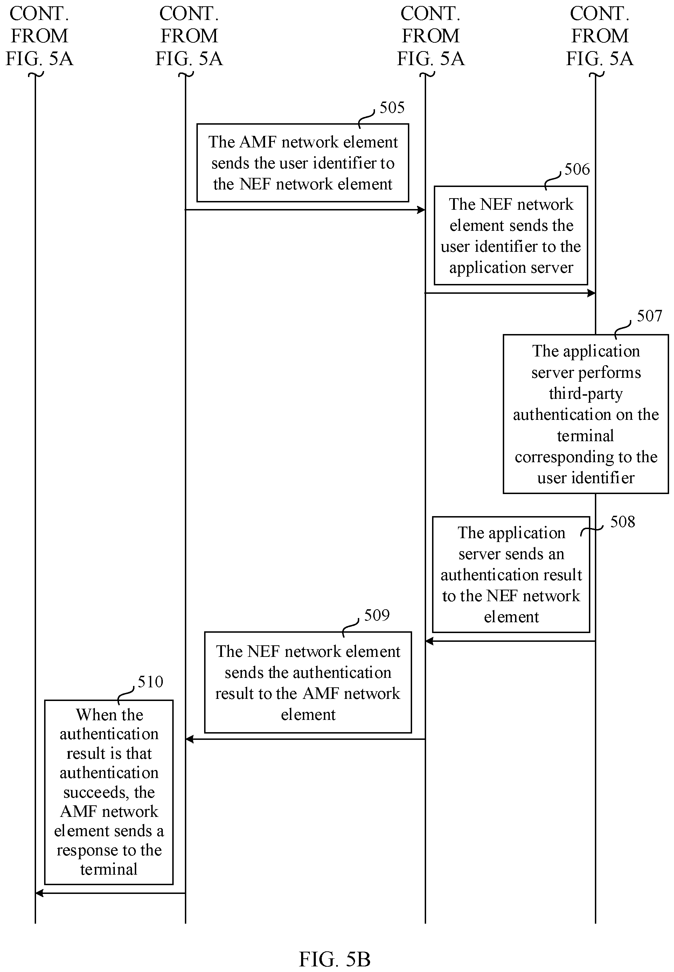

It should be noted that the terminal sends the information by using the control plane, so that a sending failure of the terminal can be avoided. For details, refer to related content in the embodiment shown in FIG. 5A and FIG. 5B in the following content.

In a second example, it is assumed that the request message includes the user identifier and does not include the application container. In this case, the foregoing method may further include: The mobility management network element sends a response message to the terminal based on the request message, where the response message includes indication information used to indicate the terminal to send information by using a control plane; the terminal sends an application container to the mobility management network element based on the indication information by using the control plane; and correspondingly, the mobility management network element receives the application container by using the control plane. For example, the terminal sends the application container to the mobility management network element through a NAS message.

It should be noted that the terminal sends the information by using the control plane, so that a sending failure of the terminal can be avoided. For details, refer to related content in the embodiment shown in FIG. 5A and FIG. 5B in the following content.

In a third example, it is assumed that the request message does not include the user identifier and the application container. In this case, the foregoing method may further include: The mobility management network element sends a response message to the terminal based on the request message; and the terminal sends a user identifier to the mobility management network element through a NAS message. For example, the user identifier may be carried in a packet data unit (Packet Data Unit, PDU) session establishment request, and the PDU session establishment request is carried in the NAS message. For another example, the NAS message includes the user identifier and the PDU session establishment request.

Further, the method may further include: The terminal sends an application container to the mobility management network element through the NAS message. For example, the application container may be carried in a PDU session establishment request, and the PDU session establishment request is carried in the NAS message. For another example, the NAS message includes the application container and the PDU session establishment request.

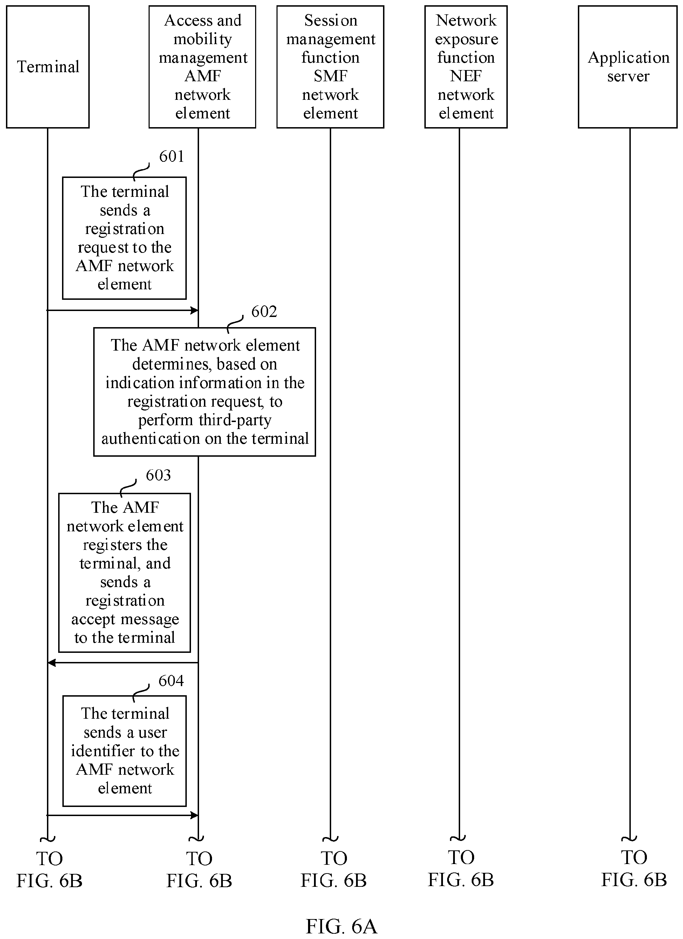

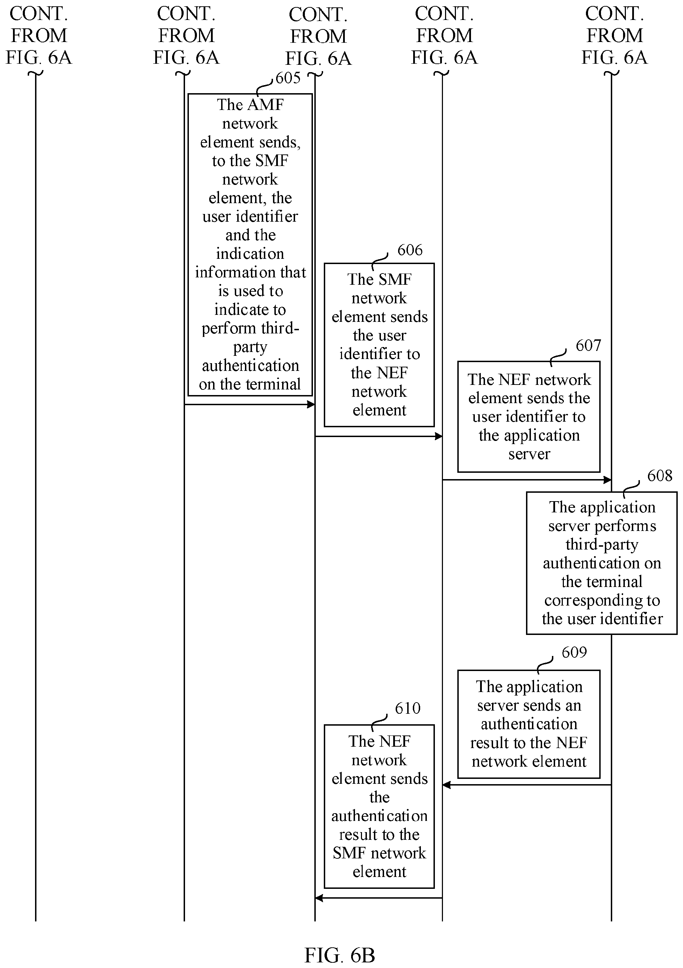

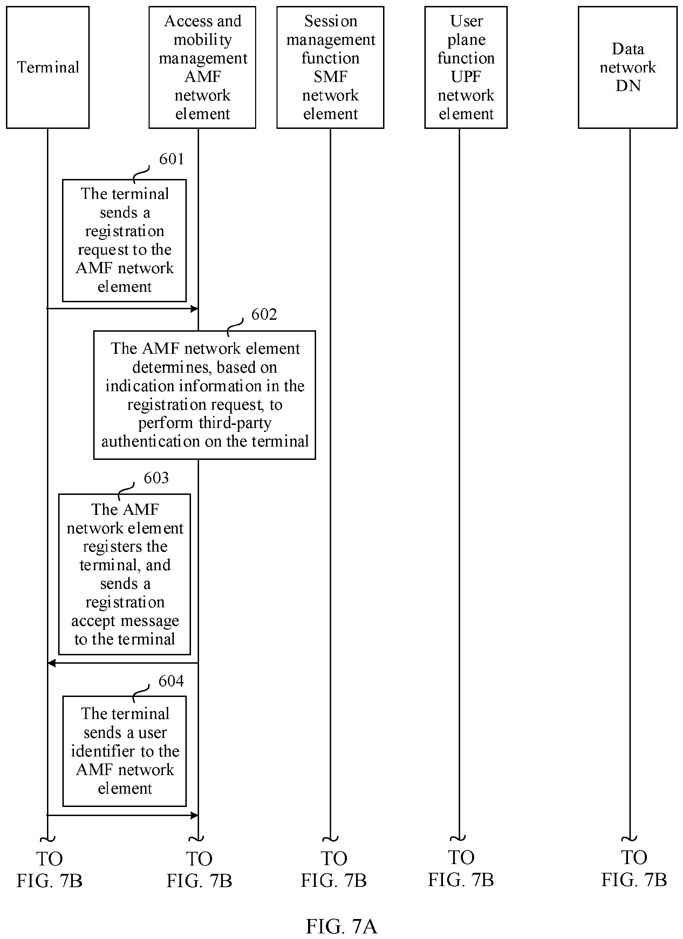

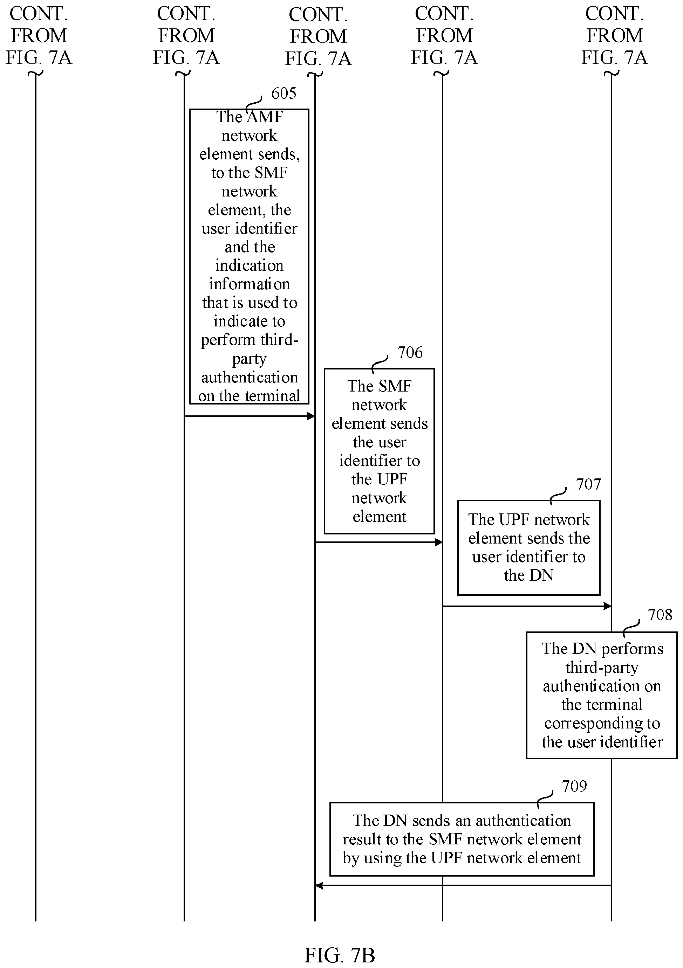

It should be noted that the terminal sends the information through the NAS message, and this can be better compatible with the prior art. For details, refer to related content in the embodiments shown in FIG. 6A and FIG. 6B and FIG. 7A and FIG. 7B in the following content.

In a fourth example, it is assumed that the request message includes the user identifier and does not include the application container. In this case, the foregoing method may further include: The mobility management network element sends a response message to the terminal based on the request message; and the terminal sends an application container to the mobility management network element through a NASSM message. For example, the application container may be carried in a PDU session establishment request, and the PDU session establishment request is carried in the NAS message. For another example, the NAS message includes the user identifier and the PDU session establishment request.

It should be noted that the terminal sends the application container through the NAS message, and this can be better compatible with the prior art. For details, refer to related content in the embodiments shown in FIG. 6A and FIG. 6B and FIG. 7A and FIG. 7B in the following content.

When the request message is a registration request, and the mobility management network element successfully registers the terminal, the response message in the foregoing examples may be a registration acceptance message. When the request message is a registration request, and the mobility management network element fails to register the terminal, the response message may be a registration failure message.

It should be noted that when the response message is a registration failure message, the response message may not include the foregoing indication information. This is not limited.

Further, optionally, the method further includes: The mobility management network element sends the user identifier to an application server by using an AUSF network element or a NEF network element.

Optionally, in a second implementation scenario of the foregoing embodiment, that the mobility management network element triggers third-party authentication in step 202 may be implemented in the following manners.

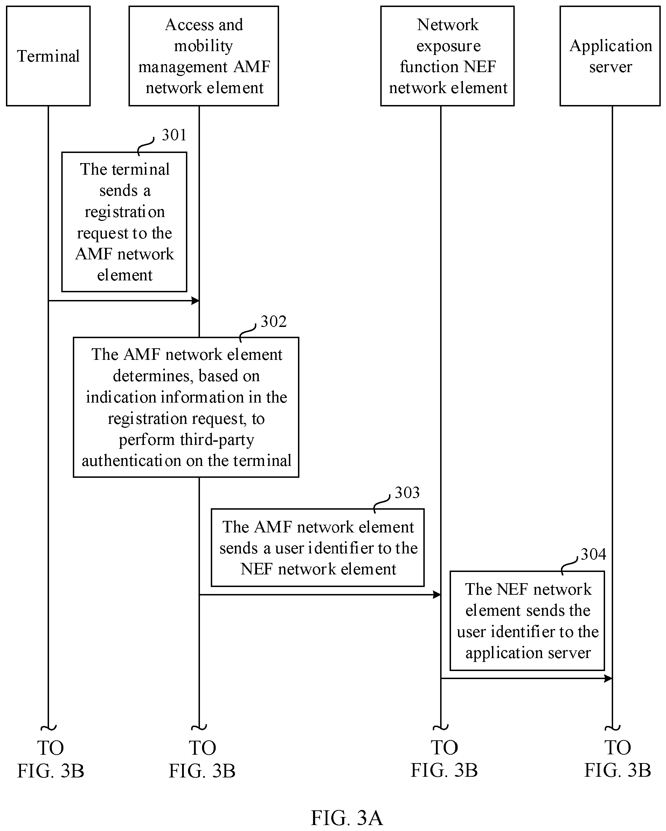

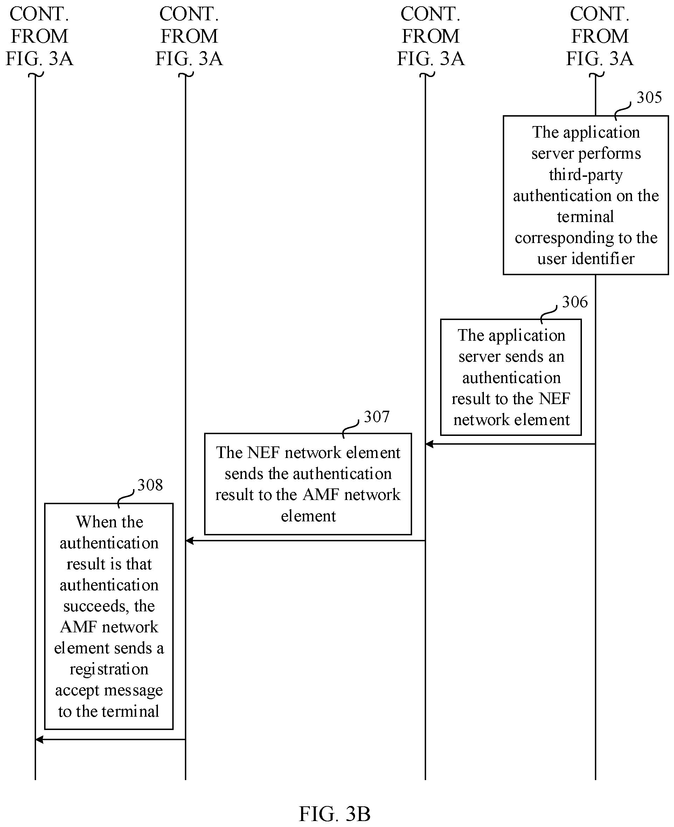

Manner A: The mobility management network element sends first information to a NEF network element, so that the NEF network element sends second information to an application server, and the application server performs third-party authentication on the terminal based on the second information. For the solution, refer to related descriptions in the embodiments shown in FIG. 3A and FIG. 3B and FIG. 5A and FIG. 5B.

The first information may be a user identifier, an application container, signaling, a message, or a data packet. This is not limited. The second information may be a user identifier, an application container, signaling, a message, or a data packet. The second information may be the same as or different from the first information. This is not limited.

In a first example, the mobility management network element sends an application identifier received from the terminal to the NEF network element. The NEF network element obtains, based on the application identifier, address information of an application server corresponding to the application identifier, and sends signaling to the application server, so that the application server performs third-party authentication on the terminal. For example, the NEF network element performs domain name server (Domain Name Server, DNS) query based on the application identifier, to obtain the address information of the application server. For another example, the NEF network element stores a correspondence between the application identifier and the address information of the application server, and the NEF network element finds, through query based on the application identifier, the address information of the application server corresponding to the application identifier. In this case, the NEF network element can determine the application server, so that the application server performs third-party authentication on the terminal.

In a second example, the mobility management network element sends a user identifier to the NEF network element, and the NEF network element obtains an application identifier based on the user identifier. The user identifier may indicate the application identifier, or the NEF network element may determine the application identifier based on a format of the user identifier. For example, if the user identifier is an identifier in a fully qualified domain name (Fully Qualified Domain Name, FQDN) format, the application identifier may be obtained based on the user identifier in the FQDN format. For another example, if the user identifier is an email address of Tencent, it may be determined, based on the application identifier, that an application server is Tencent. Then, the NEF network element may obtain, based on the application identifier, address information of an application server corresponding to the application identifier, and send signaling to the application server. For related descriptions, refer to the first example. Details are not described again. In this case, the NEF network element can determine the application server, so that the application server performs third-party authentication on the terminal.

In a third example, the mobility management network element sends an identifier of the terminal to the NEF network element, and the NEF network element determines an application identifier based on the identifier of the terminal. For example, the NEF network element may store a correspondence between the identifier of the terminal and the application identifier, and the NEF network element may determine, based on the correspondence, the application identifier corresponding to the identifier of the terminal. Then, the NEF network element may obtain, based on the application identifier, address information of an application server corresponding to the application identifier, and send signaling to the application server. For related descriptions, refer to the first example. Details are not described again. In this case, the NEF network element can determine the application server, so that the application server performs third-party authentication on the terminal.

In a fourth example, the mobility management network element determines an application identifier based on an identifier of the terminal, and sends the application identifier to the NEF network element. Then, the NEF network element may obtain, based on the application identifier, address information of an application server corresponding to the application identifier, and send signaling to the application server. For related descriptions, refer to the first example. Details are not described again. In this case, the NEF network element can determine the application server, so that the application server performs third-party authentication on the terminal.

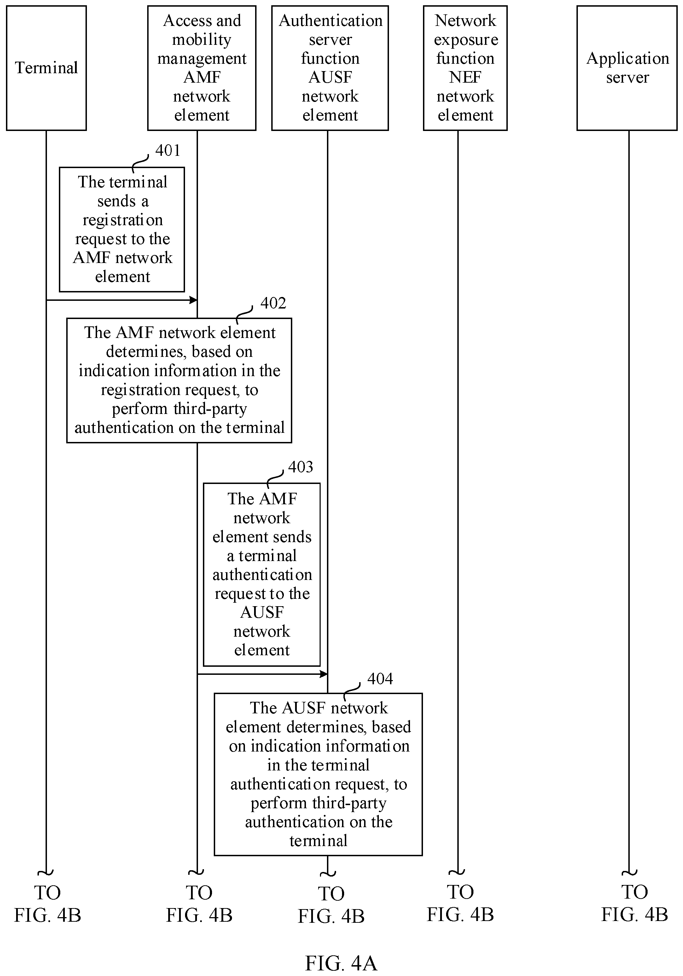

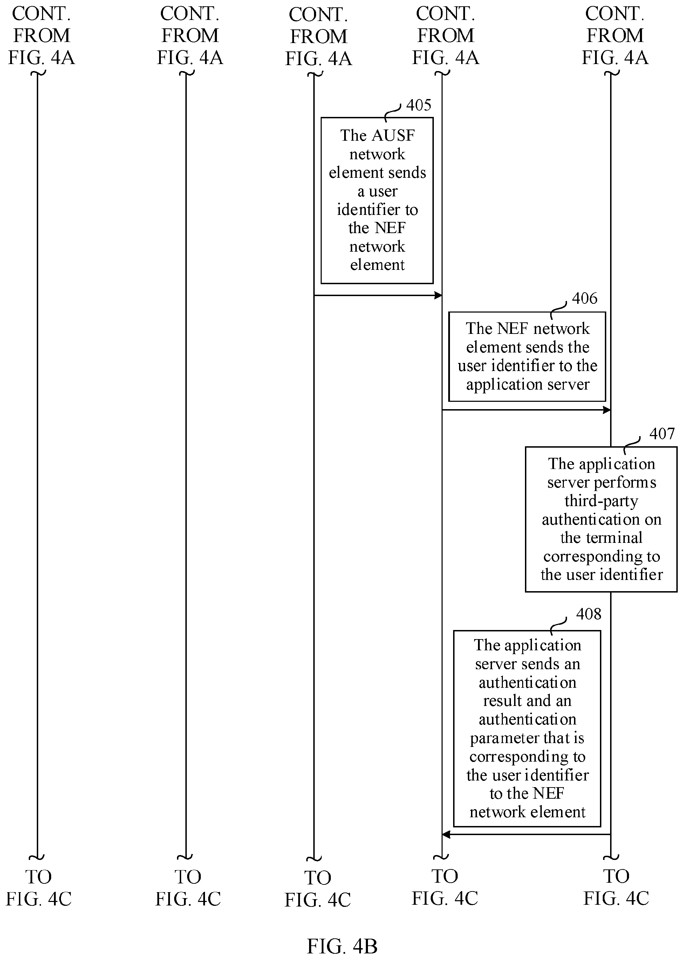

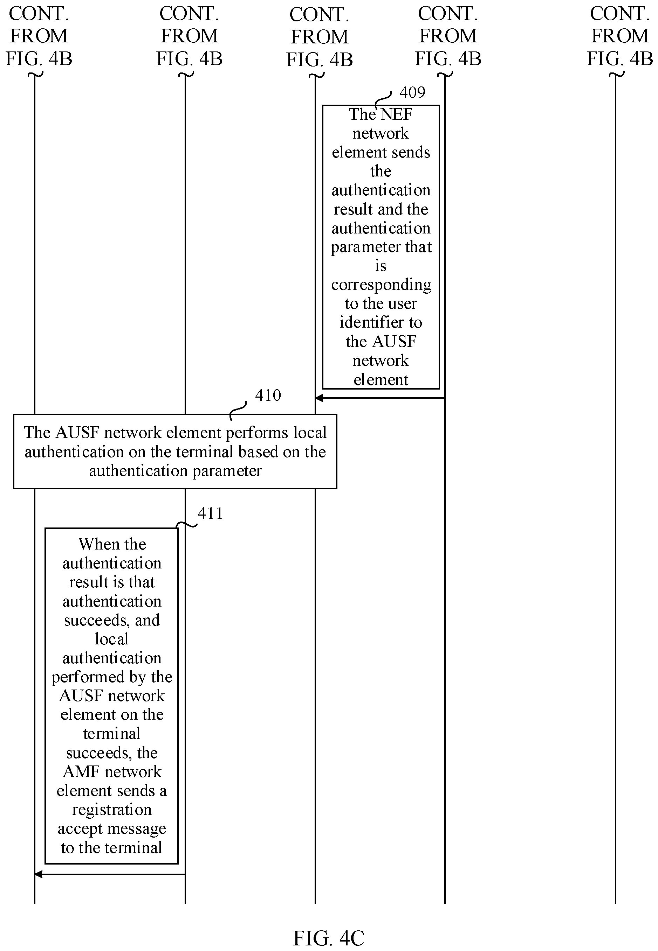

Manner B: The mobility management network element sends first information to an AUSF network element, so that the AUSF network element sends second information to an application server, and the application server performs third-party authentication on the terminal based on the second information. In this case, this can be better compatible with the prior art. For the solution, refer to related descriptions in the embodiment shown in FIG. 4A, FIG. 4B, and FIG. 4C.

For the first information and the second information, refer to the descriptions in Manner A. This is not limited.

For example, the mobility management network element sends a received user identifier to the AUSF network element, and the AUSF network element sends the user identifier to the application server by using a NEF network element, so that the application server performs third-party authentication on the terminal based on the user identifier.

Further, the mobility management network element may send a received application container to the AUSF network element, and the AUSF network element sends the application container to the application server by using the NEF network element, so that the application server performs third-party authentication on the terminal corresponding to the user identifier, based on the application container.

In Manner B, a manner in which the NEF network element determines an application identifier is similar to the first example to the fourth example in the foregoing Manner A. Details are not described herein again.

Manner C: The mobility management network element sends first information to an SMF network element, so that the SMF network element sends second information to an application server, and the application server performs third-party authentication on the terminal based on the second information. In this case, this can be better compatible with the prior art. For the solution, refer to related descriptions in the embodiment shown in FIG. 6A and FIG. 6B or FIG. 7A and FIG. 7B.

For the first information and the second information, refer to the descriptions in Manner A. This is not limited.

In an example, after determining to perform third-party authentication on the terminal, the mobility management network element sends a response to the request message to the terminal, so that the terminal sends a NAS message, where the NAS message carries a user identifier. The mobility management network element receives the NAS message that is sent by the terminal and that carries the user identifier, and transmits the NAS message to the SMF network element, so that the SMF network element sends the user identifier in the NAS message to the application server by using a NEF network element, and the application server performs third-party authentication on the terminal based on the user identifier.

Further, the NAS message may further carry an application container. The SMF network element sends the application container in the NAS message to the application server by using the NEF network element, so that the application server performs third-party authentication on the terminal based on the user identifier.

In addition, in the foregoing example, the NEF network element may determine the application server by using the method in the first example to the fourth example in Manner A in the foregoing second implementation scenario. Details are not described herein again.

In another example, an example in which the third-party authentication network element is a data network is used for description. After sending a response to the request message to the terminal, the mobility management network element receives a NAS message that is sent by the terminal and that carries a user identifier. The mobility management network element transmits the NAS message to the SMF network element, and the SMF network element sends the user identifier in the NAS message to the data network by using a UPF network element, so that the data network performs third-party authentication on the terminal based on the user identifier.

Further, the NAS message may further carry an application container. The SMF network element sends the application container in the NAS message to the data network by using the UPF network element, so that the application server performs third-party authentication on the terminal based on the user identifier.

It should be noted that any one of Manner 1, Manner 2, Manner 3, or Manner 4 in the first implementation scenario may be used in combination with any one of Manner A, Manner B, or Manner C in the second implementation scenario. For example, when the mobility management network element determines, in any one of Manner 1, Manner 2, Manner 3, or Manner 4 in the first implementation scenario, to perform third-party authentication on the terminal, the mobility management network element may use either Manner A or Manner B in the second implementation scenario in combination. For another example, when the mobility management network element determines, in any one of Manner 1, Manner 2, or Manner 3 in the first implementation scenario, to perform third-party authentication on the terminal, the mobility management network element may use Manner C in the second implementation scenario in combination.

FIG. 3A and FIG. 3B are a schematic flowchart of another communication method. As shown in FIG. 3A and FIG. 3B, in this embodiment, an example in which a mobility management network element is an AMF network element and a request message is a registration request is used for description. The mobility management network element may interact with an application server by using a NEF network element. The method includes the following steps.

Step 301: A terminal sends the registration request (registration request) to the AMF network element.

The registration request may include a user identifier and indication information used to indicate to perform third-party authentication on the terminal.

Step 302: The AMF network element determines, based on the indication information in the registration request, to perform third-party authentication on the terminal.

Optionally, step 302 is replaced with that the AMF network element determines, based on the indication information, to skip local authentication on the terminal or determine not to perform local authentication on the terminal.

Step 303: The AMF network element sends the user identifier to a NEF network element.

For example, the AMF network element may invoke a message transfer service of the NEF network element to send the user identifier to the NEF network element. The message transfer service may be, for example, NEF communication message transfer (NEF_communication_message transfer). The invoking a message transfer service may be specifically that the AMF network element sends a message transfer request to the NEF network element, and the message transfer request may be, for example, a NEF communication message transfer request (NEF_communication_message transfer request), where the message transfer request includes the user identifier.

Optionally, step 303 further includes: The NEF network element sends a message transfer response, for example, a NEF communication message transfer response (NEF_communication_message transfer response), to the AMF network element.

Step 304: The NEF network element sends the user identifier to an application server.

Step 305: The application server performs third-party authentication on the terminal corresponding to the user identifier.

Specifically, the application server may perform third-party authentication on the terminal based on an application container, and the application server may obtain the application container in the following two manners.

In an optional implementation, the registration request in step 301 carries the application container, so that the application container is sent to the application server by using the NEF network element. In another optional implementation, the registration request in step 301 does not carry the application container, and after step 304, the application server obtains the application container from the terminal, for example, the application server sends a request message to the terminal to obtain the application container.

Step 306: The application server sends an authentication result to the NEF network element.

The authentication result may include that authentication succeeds or authentication fails.

That authentication succeeds may indicate that the terminal is allowed to perform normal data transmission (normal data transmission authorized).

Step 307: The NEF network element sends the authentication result to the AMF network element.

For example, the NEF network element invokes a message notification service, for example, a NEF communication message notification (NEF_communication_message notify), provided by the NEF network element, that is, the NEF network element sends a message notification, for example, a NEF message communication message notification (NEF_communication_message notify) to the AMF network element, where the message notification includes the authentication result.

Step 308: When the authentication result is that authentication succeeds, the AMF network element sends a registration accept (registration accept) message to the terminal.

In the solution shown in FIG. 3A and FIG. 3B, the AMF network element determines to perform third-party authentication on the terminal, and triggers, by using the NEF network element, the application server to perform third-party authentication on the terminal, so that when network authentication is not performed on the terminal, the terminal may also perform communication. This can resolve an authentication problem of a terminal without a security credential mentioned in the background, and can also resolve an authentication problem of a network access failure in a scenario, for example, a scenario in which local authentication cannot be performed on a terminal due to a reason such as suspension.

FIG. 4A, FIG. 4B, and FIG. 4C are a schematic flowchart of another communication method. In the communication method shown in FIG. 4A, FIG. 4B, and FIG. 4C, third-party authentication on a terminal may be implemented based on an AUSF network element. As shown in FIG. 4A, FIG. 4B, and FIG. 4C, in this embodiment, an example in which a mobility management network element is an AMF network element and a request message is a registration request is used for description. The mobility management network element interacts with an application server by using the AUSF network element. The method includes the following steps.

Step 401: The terminal sends the registration request to the AMF network element.

The registration request may include a user identifier, an application container, and indication information used to indicate to perform third-party authentication on the terminal.

Step 402: The AMF network element determines, based on the indication information in the registration request, to perform third-party authentication on the terminal.

Step 403: The AMF network element sends a terminal authentication request to the AUSF network element.

The terminal authentication request may include the user identifier, the application container, and the indication information used to indicate to perform third-party authentication on the terminal.

For example, the AMF network element may invoke a terminal authentication service provided by the AUSF network element, to send the terminal authentication request to the AUSF network element.

Step 404: The AUSF network element determines, based on the indication information in the terminal authentication request, to perform third-party authentication on the terminal.

Alternatively, the registration request in step 401 may include an application identifier, an identifier of the terminal, or a user identifier. Correspondingly, the terminal authentication request includes the application identifier, or the identifier of the terminal, or the user identifier. Further, step 404 may be replaced with any one of the following Manner 1 to Manner 3.

Manner 1: When the terminal authentication request includes the application identifier, the AUSF network element determines to perform third-party authentication on the terminal.

Manner 2: When the terminal authentication request includes the identifier of the terminal, and an authentication manner corresponding to the identifier of the terminal is performing third-party authentication on the terminal, the AUSF network element determines to perform third-party authentication on the terminal.

Manner 3: When the terminal authentication request includes the user identifier, the AUSF network element determines to perform third-party authentication on the terminal.

Related solutions in Manner 1 to Manner 3 are similar to those in Manner 2 to Manner 4 in the foregoing first implementation scenario. Details are not described herein again.

Step 405: The AUSF network element sends the user identifier to a NEF network element.

For step 405, refer to the content of sending, by the AMF network element, the user identifier to the NEF network element in step 303. Details are not described herein again.

Step 406: The NEF network element sends the user identifier to the application server.

The NEF network element may determine the application server by using the solution provided in the embodiment shown in FIG. 2. Details are not described herein again.

Step 407: The application server performs third-party authentication on the terminal corresponding to the user identifier.

Specifically, in step 407, the application server may perform third-party authentication on the terminal based on an application container, and the application server may obtain the application container in the following two manners.

In an optional implementation, the registration request in step 401 carries the application container, so that the application container is sent to the application server by using the AUSF network element and the NEF network element. In another optional implementation, the registration request in step 401 does not carry the application container, and after step 406, the application server obtains the application container from the terminal.

Step 408: The application server sends an authentication result and an authentication parameter that is corresponding to the user identifier to the NEF network element.

For example, the authentication parameter may be a 5G authentication vector, or may be a parameter in a 5G authentication vector credential. The 5G authentication vector may be an authentication vector corresponding to EPS-AKA*, or may be an authentication vector corresponding to EAP-AKA'. The 5G authentication vector may be generated based on an application layer parameter, for example, a user identifier, or a key corresponding to the user identifier.

Step 409: The NEF network element sends the authentication result and the authentication parameter that is corresponding to the user identifier to the AUSF network element.

In step 409, for a manner in which the NEF network element sends the information to the AUSF network element, refer to step 307. Details are not described herein again.

Optionally, after step 409, the AUSF network element sends the authentication result to the AMF network element.

Step 410: The AUSF network element performs local authentication on the terminal based on the authentication parameter.

Step 410 may include: The AUSF network element, the AMF network element, and the terminal perform, based on the authentication parameter, a security procedure, air interface security negotiation, security authentication, network layer authentication, local authentication, and the like. This belongs to the prior art, and details are not described again.

Step 411: When the authentication result is that authentication succeeds, and local authentication performed by the AUSF network element on the terminal succeeds, the AMF network element sends a registration accept message to the terminal.

In step 411, when local authentication on the terminal succeeds, the AUSF network element sends, to the AMF network element, indication information used to indicate that local authentication succeeds.

Correspondingly, the AMF network element determines, based on the indication information, that local authentication on the terminal succeeds.

In step 408, the application server may alternatively not perform third-party authentication on the terminal, so that in step 408 and step 409, only the authentication parameter needs to be sent to the AUSF network element. In this case, in step 411, after determining that authentication performed by the AUSF network element on the terminal succeeds, the AMF network element may send a registration acceptance message to the terminal.

In the solution provided in FIG. 4A, FIG. 4B, and FIG. 4C, the AMF network element determines to perform third-party authentication on the terminal, and triggers the application server to send the authentication parameter to the AUSF network element, so that the AUSF network element performs local authentication. This resolves the authentication problem of a terminal without a security credential mentioned in the background, and ensures network security. In addition, authentication performed by using the AUSF network element can be compatible with the prior art. Further, when determining to perform third-party authentication on the terminal, the AMF network element may further trigger the application server to perform third-party authentication on the terminal, that is, dual authentication, thereby greatly improving network security. In addition, the solution provided in FIG. 4A, FIG. 4B, and FIG. 4C can further resolve an authentication problem of a network access failure in a scenario, for example, a scenario in which local authentication cannot be performed on a terminal due to a reason such as suspension.

FIG. 5A and FIG. 5B are a schematic flowchart of another communication method. As shown in FIG. 5A and FIG. 5B, in this embodiment, an example in which a mobility management network element is an AMF network element and a request message is a registration request is used for description. The mobility management network element interacts with an application server by using a NEF network element. The method includes the following steps.

Step 501: A terminal sends the registration request to the AMF network element.

The registration request may include indication information used to indicate to perform third-party authentication on the terminal.

Step 502: The AMF network element determines, based on the indication information in the registration request, to perform third-party authentication on the terminal.

Alternatively, the registration request in step 501 may include a user identifier, an identifier of the terminal, or an application identifier. Correspondingly, step 502 may be replaced with an implementation corresponding to the registration request in step 202 in the embodiment shown in FIG. 2, to determine to perform third-party authentication on the terminal. Details are not described again.

Step 503: The AMF network element registers the terminal, and sends a registration accept message to the terminal.

Optionally, compared with a process of registering the terminal in the prior art, the registration process in step 503 does not include a process of local authentication on the terminal. The registration accept message is a response message corresponding to the request message. The registration accept message may include indication information (Control Plane Only Indicator) used to indicate the terminal to send information by using a control plane. The indication information may be used to indicate the terminal to use the control plane to transmit information, for example, a message or data.

Step 504: The terminal sends a user identifier to the AMF network element by using the control plane.

For example, the terminal may send, by using the control plane, a message that carries the user identifier, for example, a non-access stratum (Non-access Stratum, NAS) message (message).

It should be noted that step 504 is an optional step. When the request message includes the user identifier, step 504 may not be performed. The user identifier in step 505 is the user identifier included in the request message.

Step 505: The AMF network element sends the user identifier to the NEF network element.

For step 505, refer to related descriptions in step 303.

Step 506: The NEF network element sends the user identifier to the application server.

Step 507: The application server performs third-party authentication on the terminal corresponding to the user identifier.

Specifically, the application server may perform third-party authentication on the terminal based on an application container, and the application server may obtain the application container in the following two manners.

In an optional implementation, in step 504, the terminal sends the application container to the AMF network element by using the control plane, so that the application container is sent to the application server by using the NEF network element. In another optional implementation, after step 506, the application server obtains the application container from the terminal.

Step 508: The application server sends an authentication result to the NEF network element.

For step 508, refer to step 306.

Step 509: The NEF network element sends the authentication result to the AMF network element.

For step 509, refer to step 307.

Step 510: When the authentication result is that authentication succeeds, the AMF network element sends a response to the terminal.

The response in step 510 may be a response corresponding to the message through which the terminal sends the information by using the control plane.

In the solution provided in FIG. 5A and FIG. 5B, the AMF network element determines to perform third-party authentication on the terminal, and triggers the application server to perform third-party authentication on the terminal. This resolves the authentication problem of a terminal without a security credential mentioned in the background, and improves network security. In addition, the AMF network element indicates the terminal to send information by using the control plane, so that a case in which the terminal fails to send information can be avoided. In addition, the solution provided in FIG. 5A and FIG. 5B can further resolve an authentication problem of a network access failure in a scenario, for example, a scenario in which local authentication cannot be performed on a terminal due to a reason such as suspension.

FIG. 6A and FIG. 6B are a schematic flowchart of another communication method. As shown in FIG. 6A and FIG. 6B, in this embodiment, an example in which a mobility management network element is an AMF network element and a request message is a registration request is used for description. The method includes the following steps.

Step 601: A terminal sends the registration request to the AMF network element.

The registration request may include indication information used to indicate to perform third-party authentication on the terminal.

Step 602: The AMF network element determines, based on the indication information in the registration request, to perform third-party authentication on the terminal.

Alternatively, the registration request in step 601 may include a user identifier, an identifier of the terminal, or an application identifier. Correspondingly, step 602 may be replaced with an implementation corresponding to the registration request in step 202 in the embodiment shown in FIG. 2, to determine to perform third-party authentication on the terminal. Details are not described again.

Step 603: The AMF network element registers the terminal, and sends a registration accept message to the terminal.

Optionally, for step 603, refer to step 503.

Step 604: The terminal sends a user identifier to the AMF network element.

Optionally, the user identifier is carried in a NAS message. For example, the NAS message carries a PDU session establishment request (PDU session establishment request), and the PDU session establishment request carries the user identifier. For another example, the NAS message carries a PDU session establishment request and the user identifier.

Specifically, the NAS message may further include any one or more of session management-network slice selection assistance information (session management-network slice selection assistance information, S-NSSAI), a PDU session identifier (PDU session ID), and an N1 SM container. The PDU session establishment request may also be carried in the N1 SM container.

It should be noted that step 604 is an optional step. When the request message includes the user identifier, step 604 may not be performed. The user identifier in step 605 is the user identifier included in the request message.

Step 605: The AMF network element sends, to an SMF network element, the user identifier and the indication information that is used to indicate to perform third-party authentication on the terminal.

The user identifier and the indication information that is used to indicate to perform third-party authentication on the terminal may be carried in the PDU session establishment request, or may not be carried in the PDU session establishment request.

In step 605, the AMF network element may further send any one or more of an identifier of the terminal, a data network name (data network name, DNN), and a PDU session ID to the SMF network element together with the PDU session establishment request.

Step 604 may further include: The terminal sends an application container to the AMF network element. Therefore, step 605 may further include: The AMF network element sends the application container to the SMF network element.

The application container may be carried in the NAS message. For example, the NAS message carries a PDU session establishment request (PDU session establishment request), and the PDU session establishment request carries the application container. For another example, the NAS message carries a PDU session establishment request and the application container.

Step 606: The SMF network element sends the user identifier to a NEF network element.

For step 606, refer to related descriptions of sending, by the AMF network element, the user identifier to the NEF network element in step 303.

Step 607: The NEF network element sends the user identifier to an application server.

Step 608: The application server performs third-party authentication on the terminal corresponding to the user identifier.

Specifically, the application server may perform third-party authentication on the terminal based on the application container, and the application server may obtain the application container in the following two manners.

In an optional implementation, in step 604, the terminal sends the application container to the AMF network element, so that the application container is sent to the application server by using the NEF network element. In another optional implementation, after step 607, the application server obtains the application container from the terminal.

Step 609: The application server sends an authentication result to the NEF network element.

For step 609, refer to step 306.

Step 610: The NEF network element sends the authentication result to the SMF network element.

For step 610, refer to step 307. After step 610, another process for establishing a PDU session may be performed.

In the method shown in FIG. 6A and FIG. 6B, the AMF network element determines to perform third-party authentication on the terminal, and triggers, by using the terminal, the SMF network element, or the like, the application server to perform third-party authentication on the terminal. This resolves the authentication problem of a terminal without a security credential mentioned in the background, and improves network security. In addition, third-party authentication on the terminal may be performed in the PDU session establishment request, to be better compatible with the prior art. In addition, the solution provided in FIG. 6A and FIG. 6B can further resolve an authentication problem of a network access failure in a scenario, for example, a scenario in which local authentication cannot be performed on a terminal due to a reason such as suspension.

FIG. 7A and FIG. 7B are a schematic flowchart of another communication method. As shown in FIG. 7A and FIG. 7B, in this embodiment, an example in which a mobility management network element is an AMF network element and a request message is a registration request is used for description. In this embodiment, an application server may be a data network (data network, DN). The method includes the following steps.

Step 601 to step 605 in FIG. 6A and FIG. 6B are first performed, and step 706 is performed after step 605.

Step 706: An SMF network element sends a user identifier to a UPF network element.

For example, the SMF network element may send an authentication/authorization request (authentication/authorization request) to the UPF network element, where the authentication/authorization request includes the user identifier.

Step 707: The UPF network element sends the user identifier to the DN.

For example, the UPF network element may route a data transmission message to the DN based on destination address information of the authentication/authorization request. Optionally, the destination address information is IP address information of a DN device.

Step 708: The DN performs third-party authentication on a terminal corresponding to the user identifier.

Optionally, for a manner in which the DN performs third-party authentication on the terminal corresponding to the user identifier, refer to the manner in which the application server performs third-party authentication in the first implementation scenario. Details are not described herein again.

Step 709: The DN sends an authentication result to the SMF network element by using the UPF network element.

For example, the DN may send an authentication/authorization response (authentication/authorization response) to the SMF network element by using the UPF network element, where the authentication/authorization response includes the authentication result, and the authentication result includes that authentication succeeds or authentication fails. After step 709, another process for establishing a PDU session may be performed.

In the method shown in FIG. 7A and FIG. 7B, the AMF network element determines to perform third-party authentication on the terminal, and triggers the DN to perform third-party authentication on the terminal. This resolves the authentication problem of a terminal without a security credential mentioned in the background, and improves network security. In addition, third-party authentication on the terminal may be performed in a PDU session establishment request, to be better compatible with the prior art. In addition, the solution provided in FIG. 7A and FIG. 7B can further resolve an authentication problem of a network access failure in a scenario, for example, a scenario in which local authentication cannot be performed on a terminal due to a reason such as suspension.

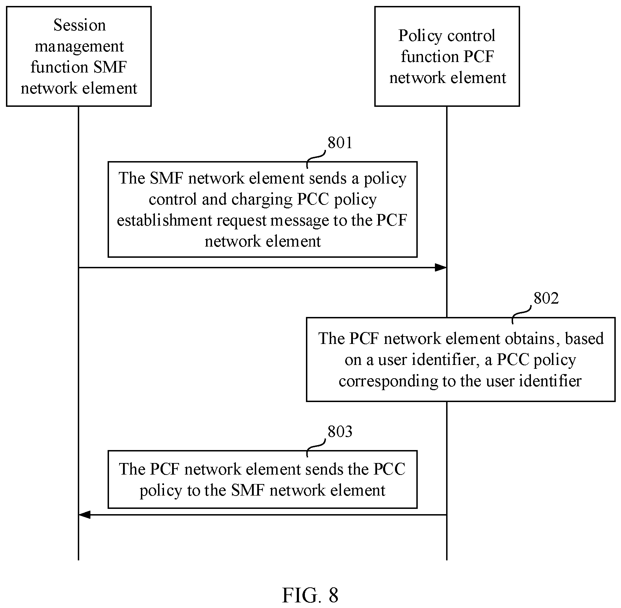

Based on the foregoing content, an embodiment of this application further provides a communication method. FIG. 8 is a schematic flowchart of another communication method. As shown in FIG. 8, the method includes the following steps.

Step 801: An SMF network element sends a PCC policy establishment request message to a PCF network element.

In step 801, the PCC policy establishment request message may also be referred to as a session management policy control obtaining request (Npcf_SMPolicyControl_Get request) provided by the PCF.

Correspondingly, the PCF network element receives the PCC policy establishment request message sent by the SMF network element.

The PCC policy establishment request message may include a user identifier.

Optionally, the PCC policy establishment request further includes any one or more of an identifier of a terminal, a PDU session identifier, a DNN, a subscriber permanent identifier (subscriber permanent identifier, SUPI) of the terminal, an application identifier, and indication information used to indicate to perform third-party authentication on the terminal.

Step 802: The PCF network element obtains, based on the user identifier, a PCC policy corresponding to the user identifier.

For example, the PCF network element may prestore a correspondence between the user identifier and the PCC policy, and the PCF network element obtains, based on the correspondence, the PCC policy corresponding to the user identifier. Alternatively, the PCF network element may prestore a correspondence between an application identifier and the PCC policy. The PCF network element may obtain, based on the user identifier, the application identifier corresponding to the user identifier, obtain, based on the correspondence, the PCC policy corresponding to the application identifier, and use the policy as the PCC policy corresponding to the user identifier.

In an example, the PCC policy may be pre-deployed by an application server on the PCF network element.

Specifically, the application server may deploy one set of PCC policies for one application, or may deploy a plurality of sets of PCC policies for one application, where a plurality of user identifiers corresponding to one application may correspond to a same PCC policy, or may correspond to different PCC policies. In this case, a dedicated PCC policy may be formulated for each application based on a feature of the application, or a dedicated PCC policy may be formulated for each user based on a level of the user.

In another example, the PCC policy may alternatively be generated by the PCF network element based on PCC rule information corresponding to the user identifier. In the PCC rule information corresponding to the user identifier, the information used to generate the PCC rule may include charging information, and the charging information may include indication information used to indicate that the application server is willing to provide a sponsor token (sponsor token) for the terminal. Optionally, the charging information further includes a limit of the sponsor token that the application server is willing to provide for the terminal. In this case, a new charging mode is provided, a data exchange manner is simplified, and a basis can be laid for the application server to be responsible for subscription and terminal management.

The PCC policy may include quality of service (Quality of Service, QoS) parameters (parameters). Alternatively, the PCC policy pre-deployed by the application server may not include the QoS parameters. In this case, the PCF network element may obtain a QoS parameter corresponding to the user identifier, for example, request the QoS parameter corresponding to the user identifier from the application server.

The QoS parameters may include a 5G QoS identifier (5G QoS identifier, 5QI), an allocation and retention priority (allocation and retention priority, ARP), a guaranteed flow bit rate (Guaranteed Flow Bit Rate, GFBR), a maximum flow bit rate (Maximum Flow Bit Rate, MFBR), or the like.

Step 803: The PCF network element sends the PCC policy to the SMF network element.

Correspondingly, the SMF network element receives, from the PCF network element, the PCC policy corresponding to the user identifier.

For example, in the PCC policy, the terminal may be allowed to transmit only data corresponding to the application identifier. For another example, the PCC policy specifies that special charging is used, and an application is charged based on a quantity of users or a group user mode. In this scenario, the SMF network element/a UPF network element does not need to collect statistics about data traffic used by the terminal.

In the method provided in FIG. 8, a PCC policy at an application-level granularity or a user-level granularity may be generated, so that flexibility of the PCC policy can be improved.

It should be noted that the solution in step 802 may also be used in the foregoing embodiment. Similarly, FIG. 3A and FIG. 3B to FIG. 7A and FIG. 7B may further include that the PCF network element receives the charging information, and in step 306 in FIG. 3B, the application server may send the charging information to the NEF, and then the NEF network element sends the charging information to the PCF network element; or in step 408 in FIG. 4B, the application server sends the charging information to the NEF, and then the NEF network element sends the charging information to the PCF network element; or in step 508 in FIG. 5B, the application server sends the charging information to the NEF, and then the NEF network element sends the charging information to the PCF network element; or in step 609 in FIG. 6B, the application server sends the charging information to the NEF, and then the NEF network element sends the charging information to the PCF network element. Optionally, if the solution is applied to the scenario in FIG. 7A and FIG. 7B, the DN may send the charging information to the UPF network element in step 709 in FIG. 7B, and then the UPF network element sends the charging information to the PCF network element.

It should be noted that the solution in step 801 to step 803 may also be used in the foregoing embodiment. Similarly, step 801 to step 803 may be performed after the terminal initiates the PDU session establishment request. For example, after step 308 in FIG. 3B, after step 411 in FIG. 4C, and after step 501 in FIG. 5A, the terminal may initiate the PDU session establishment process, and after the PDU session establishment process is initiated, the SMF network element may perform step 801 to send the PCC policy establishment request message to the PCF network element, and then, step 802 and step 803 are performed. Optionally, if the solution is applied to the scenarios in FIG. 6A and FIG. 6B and FIG. 7A and FIG. 7B, step 801 to step 803 may alternatively occur after step 610 in FIG. 6B or after step 709 in FIG. 7B.

In any embodiment shown in FIG. 2 to FIG. 8, optionally, after third-party authentication performed by the application server on the terminal succeeds, the application server may send a root key to the SMF network element. Correspondingly, the SMF network element receives the root key sent by the application server, and the SMF network element performs key agreement with the terminal based on the root key. Optionally, the root key may be used to further generate a key used for security protection between the terminal and the SMF network element/UPF network element, so that security of control plane signaling/user plane data can be improved, where "/" may represent a meaning of and/or.

For example, when the foregoing solution is used in the foregoing embodiment, in step 306 in FIG. 3B, the application server may send the root key to the NEF, and then the NEF network element sends the root key to the SMF network element; or in step 408 in FIG. 4B, the application server sends the root key to the NEF, and then the NEF network element sends the root key to the SMF network element; or in step 508 in FIG. 5B, the application server sends the root key to the NEF, and then the NEF network element sends the root key to the SMF network element; or in step 609 in FIG. 6B, the application server sends the root key to the NEF, and then the NEF network element sends the root key to the SMF network element. Optionally, if the solution is applied to the scenario in FIG. 7A and FIG. 7B, the DN may send the root key to the UPF network element in step 709 in FIG. 7B, and then the UPF network element sends the root key to the SMF network element.

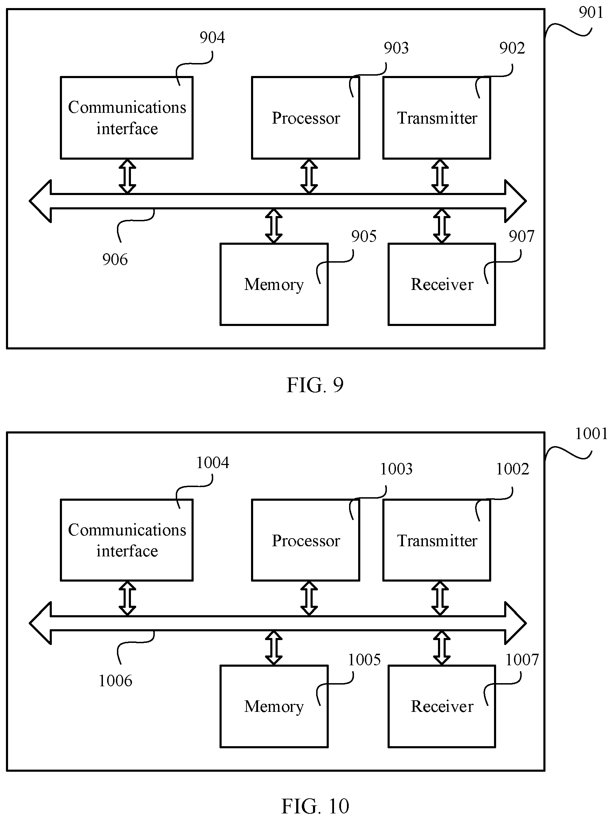

Based on the foregoing content and a same concept, this application provides a communications apparatus, configured to perform any solution on a mobility management network element side in the methods shown in FIG. 2 to FIG. 8. FIG. 9 is a schematic structural diagram of a communications apparatus. As shown in FIG. 9, a communications apparatus 901 includes a processor 903, a transmitter 902, a receiver 907, a memory 905, and a communications interface 904. The processor 903, the transmitter 902, the receiver 907, the memory 905, and the communications interface 904 are connected to each other by using a bus 906. Optionally, the transceiver may include the transmitter 902 and the receiver 907. The communications apparatus 901 in this embodiment may be the mobility management network element, the MME network element, or the AMF network element in the foregoing content.

Optionally, the memory 905 may be further configured to store a program instruction, and the processor 903 invokes the program instruction stored in the memory 905, to perform one or more steps or an optional implementation in the embodiments shown in the foregoing solutions, so that the communications apparatus 901 implements a function of the mobility management network element in the foregoing methods.

The processor 903 is configured to: execute the instruction stored in the memory, control the transmitter 902 to send a signal, and control the receiver 907 to receive a signal. When the processor 903 executes the instruction stored in the memory, the receiver 907 in the communications apparatus 901 is configured to receive a request message from a terminal, where the request message is used to request access to a network. The processor 903 is configured to trigger third-party authentication when determining, based on the request message, to perform third-party authentication on the terminal.

In an optional design, the processor 903 is configured to: when the request message includes indication information used to indicate to perform third-party authentication on the terminal, determine to perform third-party authentication on the terminal; or when the request message includes an application identifier, determine to perform third-party authentication on the terminal; or when the request message includes an identifier of the terminal, and an authentication manner corresponding to the identifier of the terminal is performing third-party authentication on the terminal, determine to perform third-party authentication on the terminal.

In an optional design, the request message further includes a user identifier; or the request message further includes a user identifier and an application container, and the application container is used by an application server to perform third-party authentication on the terminal.

In an optional design, the transmitter 902 is further configured to send a response message to the terminal based on the request message, where the response message includes indication information used to indicate the terminal to send information by using a control plane; and the receiver 907 is further configured to receive a user identifier by using the control plane.

In an optional design, the receiver 907 is further configured to receive an application container by using a control plane, where the application container is used by an application server to perform third-party authentication on the terminal.

In an optional design, the processor 903 is configured to: when the request message includes a user identifier, determine to perform third-party authentication on the terminal.

In an optional design, the request message further includes an application container, and the application container is used by an application server to perform third-party authentication on the terminal.

In an optional design, the transmitter 902 is configured to send a user identifier to an application server by using an authentication server function AUSF network element or a network exposure function NEF network element.

Based on the foregoing content and a same concept, this application provides a communications apparatus, configured to perform any solution on a terminal side in the methods shown in FIG. 2 to FIG. 8. FIG. 10 is a schematic structural diagram of another communications apparatus. As shown in FIG. 10, a communications apparatus 1001 includes a processor 1003, a transmitter 1002, a receiver 1007, a memory 1005, and a communications interface 1004. The processor 1003, the transmitter 1002, the receiver 1007, the memory 1005, and the communications interface 1004 are connected to each other by using a bus 1006. Optionally, the transceiver may include the transmitter 1002 and the receiver 1007.

Optionally, the memory 1005 may be further configured to store a program instruction, and the processor 1003 invokes the program instruction stored in the memory 1005, to perform one or more steps or an optional implementation in the embodiments shown in the foregoing solutions, so that the communications apparatus 1001 implements a function of the terminal in the foregoing methods.

The processor 1003 is configured to: execute the instruction stored in the memory, control the transmitter 1002 to send a signal, and control the receiver 1007 to receive a signal. When the processor 1003 executes the instruction stored in the memory, the transmitter 1002 in the communications apparatus 1001 is configured to send a request message to a mobility management network element, where the request message includes authentication reference information, and the authentication reference information is used by the mobility management network element to determine whether to perform third-party authentication on a terminal. The receiver 1007 is configured to receive a response message from the mobility management network element in response to the request message.

In an optional design, the authentication reference information includes indication information or an application identifier used to indicate to perform third-party authentication on the terminal. In an optional design, the request message further includes a user identifier. In an optional design, the authentication reference information includes a user identifier. In an optional design, the request message further includes an application container, and the application container is used by an application server to perform third-party authentication on the terminal.

In an optional design, the response message includes indication information used to indicate the terminal to send information by using a control plane, and the transmitter 1002 is further configured to send a user identifier to the mobility management network element by using the control plane.

In an optional design, the transmitter 1002 is further configured to send an application container to the mobility management network element by using a control plane, where the application container is used by an application server to perform third-party authentication on the terminal.

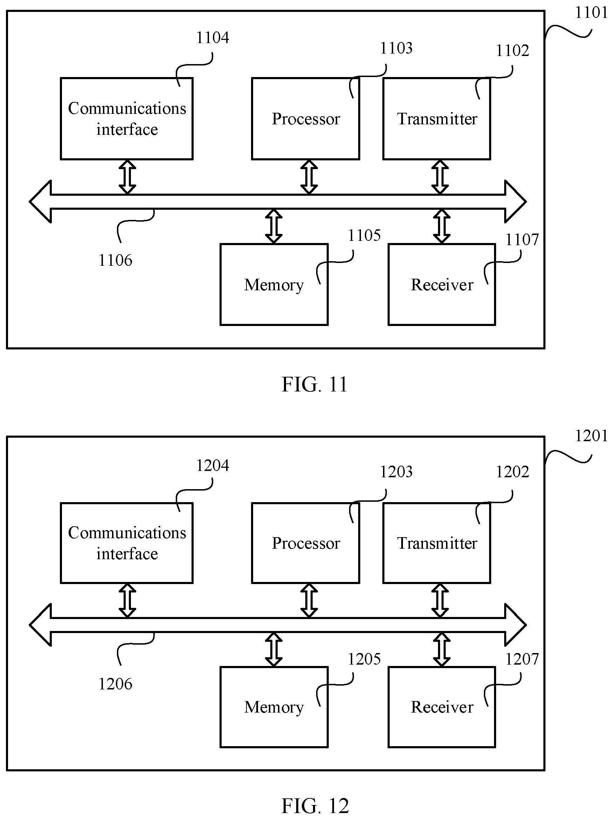

Based on the foregoing content and a same concept, this application provides a communications apparatus, configured to perform any solution on an AUSF network element side in the methods shown in FIG. 2 to FIG. 8. FIG. 11 is a schematic structural diagram of another communications apparatus. As shown in FIG. 11, a communications apparatus 1101 includes a processor 1103, a transmitter 1102, a receiver 1107, a memory 1105, and a communications interface 1104. The processor 1103, the transmitter 1102, the receiver 1107, the memory 1105, and the communications interface 1104 are connected to each other by using a bus 1106. Optionally, the transceiver may include the transmitter 1102 and the receiver 1107.

Optionally, the memory 1105 may be further configured to store a program instruction, and the processor 1103 invokes the program instruction stored in the memory 1105, to perform one or more steps or an optional implementation in the embodiments shown in the foregoing solutions, so that the communications apparatus 1101 implements a function of the AUSF network element in the foregoing methods.

The processor 1103 is configured to: execute the instruction stored in the memory, control the transmitter 1102 to send a signal, and control the receiver 1107 to receive a signal. When the processor 1103 executes the instruction stored in the memory, the receiver 1107 in the communications apparatus 1101 is configured to: receive a user identifier from a mobility management network element, and receive an authentication parameter from an application server. The processor 1103 is configured to request, from the application server, an authentication parameter corresponding to the user identifier.

In an optional design, the transmitter 1102 is further configured to send an application container to the application server, where the application container is used by the application server to perform third-party authentication on a terminal.

In an optional design, the processor 1103 is further configured to perform authentication on a terminal based on the authentication parameter.

Based on the foregoing content and a same concept, this application provides a communications apparatus, configured to perform any solution on a PCF network element side in the methods shown in FIG. 2 to FIG. 8. FIG. 12 is a schematic structural diagram of another communications apparatus. As shown in FIG. 12, a communications apparatus 1201 includes a processor 1203, a transmitter 1202, a receiver 1207, a memory 1205, and a communications interface 1204. The processor 1203, the transmitter 1202, the receiver 1207, the memory 1205, and the communications interface 1204 are connected to each other by using a bus 1206. Optionally, the transceiver may include the transmitter 1202 and the receiver 1207.

Optionally, the memory 1205 may be further configured to store a program instruction, and the processor 1203 invokes the program instruction stored in the memory 1205, to perform one or more steps or an optional implementation in the embodiments shown in the foregoing solutions, so that the communications apparatus 1201 implements a function of the PCF network element in the foregoing methods.

The processor 1203 is configured to: execute the instruction stored in the memory, control the transmitter 1202 to send a signal, and control the receiver 1207 to receive a signal. When the processor 1203 executes the instruction stored in the memory, the receiver 1207 in the communications apparatus 1201 is configured to receive a PCC policy establishment request message sent by an SMF network element, and the PCC policy establishment request message includes a user identifier. The processor 1203 is configured to obtain, according to a preset PCC policy, a PCC policy corresponding to the user identifier. The transmitter 1202 is configured to send the PCC policy to the SMF network element. In this case, a PCC policy at a finer granularity may be obtained, thereby improving flexibility of the PCC policy.

In an optional implementation, the PCC policy establishment request message further includes an application identifier. Optionally, the processor 1203 is configured to obtain, according to the preset PCC policy, a PCC policy corresponding to the user identifier and the application identifier. In an optional implementation, the preset PCC policy includes at least two first PCC policies, and the two first PCC policies correspond to two different application identifiers. When the application identifier corresponds to at least two PCC policies, the at least two PCC policies have at least two second PCC policies, and the two second PCC policies correspond to two different user identifiers. In this case, the PCC policy may be formulated to an application-level granularity or a user-level granularity. For example, different PCC policies are set for different applications, or different PCC policies are set for different users corresponding to a same application, thereby improving flexibility of setting a PCC policy.

In an optional implementation, the preset PCC policy further includes charging information. In this case, an application server may provide a payment service for a terminal, or lay a basis for a user to formulate a personalized charging standard.

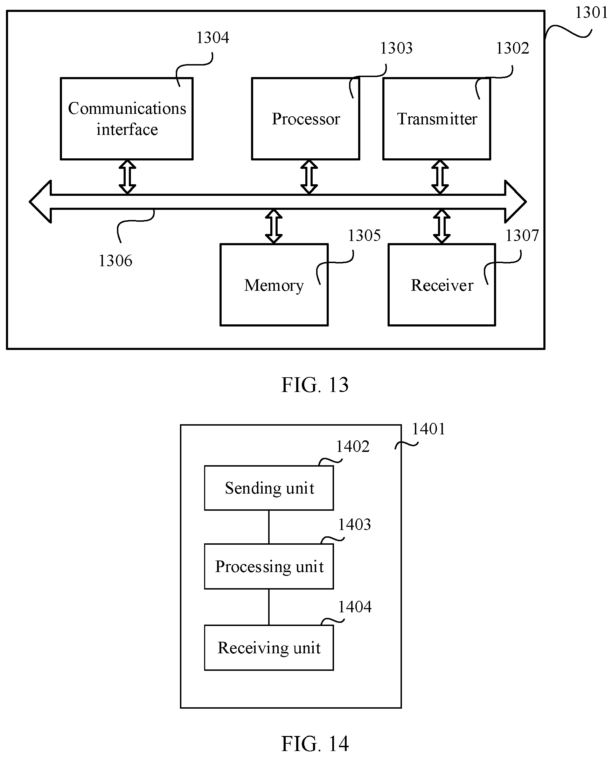

Based on the foregoing content and a same concept, this application provides a communications apparatus, configured to perform any solution on an SMF network element side in the methods shown in FIG. 2 to FIG. 8. FIG. 13 is a schematic structural diagram of another communications apparatus. As shown in FIG. 13, a communications apparatus 1301 includes a processor 1303, a transmitter 1302, a receiver 1307, a memory 1305, and a communications interface 1304. The processor 1303, the transmitter 1302, the receiver 1307, the memory 1305, and the communications interface 1304 are connected to each other by using a bus 1306. Optionally, the transceiver may include the transmitter 1302 and the receiver 1307.

Optionally, the memory 1305 may be further configured to store a program instruction, and the processor 1303 invokes the program instruction stored in the memory 1305, to perform one or more steps or an optional implementation in the embodiments shown in the foregoing solutions, so that the communications apparatus 1301 implements a function of the SMF network element in the foregoing methods.

The processor 1303 is configured to: execute the instruction stored in the memory, control the transmitter 1302 to send a signal, and control the receiver 1307 to receive a signal. When the processor 1303 executes the instruction stored in the memory, the transmitter 1302 in the communications apparatus 1301 is configured to send a PCC policy establishment request message to a PCF network element, and the PCC policy establishment request message includes a user identifier. The receiver 1307 is configured to receive, from the PCF network element, a PCC policy corresponding to the user identifier. In an optional implementation, the PCC policy establishment request message further includes an application identifier. In this case, a PCC policy at a finer granularity may be obtained. For example, the PCC policy may be formulated to an application-level granularity or a user-level granularity. For example, different PCC policies are set for different applications, or different PCC policies are set for different users corresponding to a same application. It can be learned that, this method may improve flexibility of setting a PCC policy.

In an optional implementation, the receiver 1307 is further configured to receive a root key sent by an application server; and an SMF network element performs key agreement with a terminal based on the root key. In this case, when local authentication is not performed on the terminal, the application server may allocate the root key to the SMF network element, to implement security protection between the SMF network element and the terminal.

In FIG. 9, FIG. 10, FIG. 11, FIG. 12, and FIG. 13, any one of the bus 906, the bus 1006, the bus 1106, the bus 1206, and the bus 1306 may be a peripheral component interconnect (peripheral component interconnect, PCI) bus, an extended industry standard architecture (extended industry standard architecture, EISA) bus, or the like. The bus may be categorized as an address bus, a data bus, a control bus, or the like. For ease of representation, only one thick line is used to represent the bus in FIG. 9, FIG. 10, FIG. 11, FIG. 12, and FIG. 13, but this does not mean that there is only one bus or only one type of bus.

In FIG. 9, FIG. 10, FIG. 11, FIG. 12, and FIG. 13, any one of the memory 905, the memory 1005, the memory 1105, the memory 1205, and the memory 1305 may include a volatile memory (volatile memory), for example, a random access memory (random-access memory, RAM). The memory may also include a non-volatile memory (non-volatile memory), for example, a flash memory (flash memory), a hard disk drive (hard disk drive, HDD), or a solid-state drive (solid-state drive, SSD). The memory may further include a combination of the foregoing types of memories.

In FIG. 9, FIG. 10, FIG. 11, FIG. 12, and FIG. 13, any one of the communications interface 904, the communications interface 1004, the communications interface 1104, the communications interface 1204, and the communications interface 1304 may be a wired communications interface, a wireless communications interface, or a combination thereof, and the wired communications interface may be, for example, an Ethernet interface. The Ethernet interface may be an optical interface, an electrical interface, or a combination thereof. The wireless communications interface may be a WLAN interface.

In FIG. 9, FIG. 10, FIG. 11, FIG. 12, and FIG. 13, any one of the processor 903, the processor 1003, the processor 1103, the processor 1203, and the processor 1303 may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field-programmable gate array, FPGA), a generic array logic (generic array logic, GAL), or any combination thereof.

Based on a same concept, an embodiment of this application provides a communications apparatus, configured to perform any solution on the mobility management network element side in the foregoing method procedures. FIG. 14 is a schematic structural diagram of another communications apparatus. As shown in FIG. 14, a communications apparatus 1401 includes a sending unit 1402, a processing unit 1403, and a receiving unit 1404. The communications apparatus 1401 in this embodiment may be the mobility management network element, the AMF network element, or the MME, and may perform the solutions corresponding to FIG. 2 to FIG. 8.

The receiving unit 1404 is configured to receive a request message from a terminal, where the request message is used to request access to a network. The processing unit 1403 is configured to trigger third-party authentication when determining, based on the request message, to perform third-party authentication on the terminal.

It should be understood that division of the foregoing units of a network device is merely logical function division. In actual implementation, all or some of the units may be integrated into one physical entity, or may be physically separated. In this embodiment of this application, the sending unit 1402 in FIG. 14 may be implemented by the transmitter 902 in FIG. 9, the receiving unit 1404 in FIG. 14 may be implemented by the receiver 907 in FIG. 9, and the processing unit 1403 in FIG. 14 may be implemented by the processor 903 in FIG. 9. In other words, the sending unit 1402 in this embodiment of this application may perform the solution performed by the transmitter 902 in FIG. 9, the receiving unit 1404 in this embodiment of this application may perform the solution performed by the receiver 907 in FIG. 9, and the processing unit 1403 in this embodiment of this application may perform the solution performed by the processor 903 in FIG. 9. For other content, refer to the foregoing content. Details are not described herein again. As shown in FIG. 9, the memory 905 included in the communications apparatus 901 may be configured to store code used when the processor 903 included in the communications apparatus 901 performs the solution. The code may be a program/code pre-installed when the communications apparatus 901 is delivered from a factory.

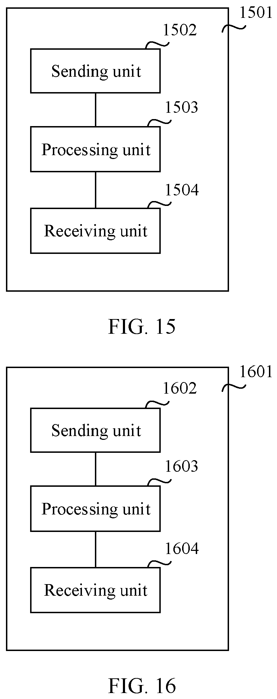

Based on a same concept, an embodiment of this application provides a communications apparatus, configured to perform any solution on the terminal side in the foregoing method procedures. FIG. 15 is a schematic structural diagram of another communications apparatus. As shown in FIG. 15, a communications apparatus 1501 includes a sending unit 1502, a processing unit 1503, and a receiving unit 1504. The communications apparatus 1501 in this embodiment may perform the solutions corresponding to FIG. 2 to FIG. 8.

The sending unit 1502 is configured to send a request message to a mobility management network element, where the request message includes authentication reference information, and the authentication reference information is used by the mobility management network element to determine whether to perform third-party authentication on a terminal; and the receiving unit 1504 is configured to receive a response message from the mobility management network element in response to the request message.

It should be understood that division of the foregoing units of a network device is merely logical function division. In actual implementation, all or some of the units may be integrated into one physical entity, or may be physically separated. In this embodiment of this application, the sending unit 1502 in FIG. 15 may be implemented by the transmitter 1002 in FIG. 10, the receiving unit 1504 in FIG. 15 may be implemented by the receiver 1007 in FIG. 10, and the processing unit 1503 in FIG. 15 may be implemented by the processor 1003 in FIG. 10. In other words, the sending unit 1502 in this embodiment of this application may perform the solution performed by the transmitter 1002 in FIG. 10, the receiving unit 1504 in this embodiment of this application may perform the solution performed by the receiver 1007 in FIG. 10, and the processing unit 1503 in this embodiment of this application may perform the solution performed by the processor 1003 in FIG. 10. For other content, refer to the foregoing content. Details are not described herein again. As shown in FIG. 10, the memory 1005 included in the communications apparatus 1001 may be configured to store code used when the processor 1003 included in the communications apparatus 1001 performs the solution. The code may be a program/code pre-installed when the communications apparatus 1001 is delivered from a factory.

Based on a same concept, an embodiment of this application provides a communications apparatus, configured to perform any solution on the AUSF network element side in the foregoing method procedures. FIG. 16 is a schematic structural diagram of another communications apparatus. As shown in FIG. 16, a communications apparatus 1601 includes a sending unit 1602, a processing unit 1603, and a receiving unit 1604. The communications apparatus 1601 in this embodiment may perform the solutions corresponding to FIG. 2 to FIG. 8.

The receiving unit 1604 is configured to: receive a user identifier from a mobility management network element, and receive an authentication parameter from an application service unit; and the processing unit 1603 is configured to request, from the application service unit, an authentication parameter corresponding to the user identifier.

It should be understood that division of the foregoing units of a network device is merely logical function division. In actual implementation, all or some of the units may be integrated into one physical entity, or may be physically separated. In this embodiment of this application, the sending unit 1602 in FIG. 16 may be implemented by the transmitter 1102 in FIG. 11, the receiving unit 1604 in FIG. 16 may be implemented by the receiver 1107 in FIG. 11, and the processing unit 1603 in FIG. 16 may be implemented by the processor 1103 in FIG. 11. In other words, the sending unit 1602 in this embodiment of this application may perform the solution performed by the transmitter 1102 in FIG. 11, the receiving unit 1604 in this embodiment of this application may perform the solution performed by the receiver 1107 in FIG. 11, and the processing unit 1603 in this embodiment of this application may perform the solution performed by the processor 1103 in FIG. 11. For other content, refer to the foregoing content. Details are not described herein again. As shown in FIG. 11, the memory 1105 included in the communications apparatus 1101 may be configured to store code used when the processor 1103 included in the communications apparatus 1101 performs the solution. The code may be a program/code pre-installed when the communications apparatus 1101 is delivered from a factory.

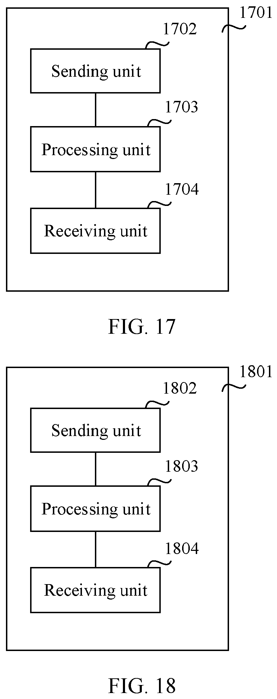

Based on a same concept, an embodiment of this application provides a communications apparatus, configured to perform any solution on the PCF network element side in the foregoing method procedures. FIG. 17 is a schematic structural diagram of another communications apparatus. As shown in FIG. 17, a communications apparatus 1701 includes a sending unit 1702, a processing unit 1703, and a receiving unit 1704. The communications apparatus 1701 in this embodiment may perform the solutions corresponding to FIG. 2 to FIG. 8.

The receiving unit 1704 is configured to receive a PCC policy establishment request message sent by an SMF network element, and the PCC policy establishment request message includes a user identifier; the processing unit 1703 is configured to obtain, according to a preset PCC policy, a PCC policy corresponding to the user identifier; and the sending unit 1702 is configured to send the PCC policy to the SMF network element.

It should be understood that division of the foregoing units of a network device is merely logical function division. In actual implementation, all or some of the units may be integrated into one physical entity, or may be physically separated. In this embodiment of this application, the sending unit 1702 in FIG. 17 may be implemented by the transmitter 1202 in FIG. 12, the receiving unit 1704 in FIG. 17 may be implemented by the receiver 1207 in FIG. 12, and the processing unit 1703 in FIG. 17 may be implemented by the processor 1203 in FIG. 12. In other words, the sending unit 1702 in this embodiment of this application may perform the solution performed by the transmitter 1202 in FIG. 12, the receiving unit 1704 in this embodiment of this application may perform the solution performed by the receiver 1207 in FIG. 12, and the processing unit 1703 in this embodiment of this application may perform the solution performed by the processor 1203 in FIG. 12. For other content, refer to the foregoing content. Details are not described herein again. As shown in FIG. 12, the memory 1205 included in the communications apparatus 1201 may be configured to store code used when the processor 1203 included in the communications apparatus 1201 performs the solution. The code may be a program/code pre-installed when the communications apparatus 1201 is delivered from a factory.

Based on a same concept, an embodiment of this application provides a communications apparatus, configured to perform any solution on the SMF network element side in the foregoing method procedures. FIG. 18 is a schematic structural diagram of another communications apparatus. As shown in FIG. 18, a communications apparatus 1801 includes a sending unit 1802, a processing unit 1803, and a receiving unit 1804. The communications apparatus 1801 in this embodiment may perform the solutions corresponding to FIG. 2 to FIG. 8.

The sending unit 1802 is configured to send a PCC policy establishment request message to a PCF network element, where the PCC policy establishment request message includes a user identifier; and the receiving unit 1804 is configured to receive, from the PCF network element, a PCC policy corresponding to the user identifier.

It should be understood that division of the foregoing units of a network device is merely logical function division. In actual implementation, all or some of the units may be integrated into one physical entity, or may be physically separated. In this embodiment of this application, the sending unit 1802 in FIG. 18 may be implemented by the transmitter 1302 in FIG. 13, the receiving unit 1804 in FIG. 18 may be implemented by the receiver 1307 in FIG. 13, and the processing unit 1803 in FIG. 18 may be implemented by the processor 1303 in FIG. 13. In other words, the sending unit 1802 in this embodiment of this application may perform the solution performed by the transmitter 1302 in FIG. 13, the receiving unit 1804 in this embodiment of this application may perform the solution performed by the receiver 1307 in FIG. 13, and the processing unit 1803 in this embodiment of this application may perform the solution performed by the processor 1303 in FIG. 13. For other content, refer to the foregoing content. Details are not described herein again. As shown in FIG. 13, the memory 1305 included in the communications apparatus 1301 may be configured to store code used when the processor 1303 included in the communications apparatus 1301 performs the solution. The code may be a program/code pre-installed when the communications apparatus 1301 is delivered from a factory.

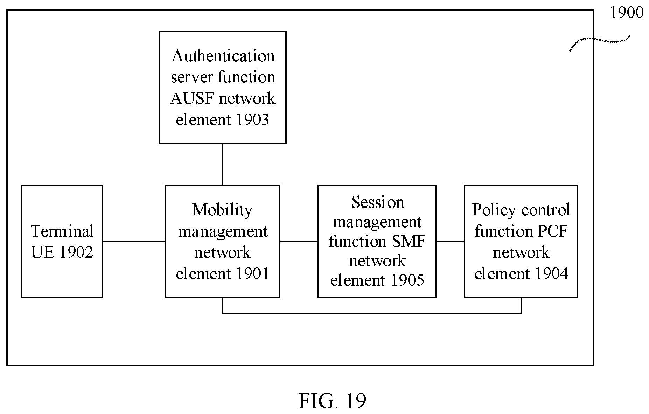

Based on a same concept, an embodiment of this application provides a communications system, configured to perform the solutions in the foregoing method procedures. FIG. 19 is an example of a schematic structural diagram of a communications system according to an embodiment of this application. As shown in FIG. 19, the communications system 1900 may include a mobility management network element 1901 and a terminal 1902. Optionally, the communications system may further include any one or more of an AUSF network element 1903, a PCF network element 1904, and an SMF network element 1905, which are separately configured to implement corresponding steps in the methods in FIG. 2 to FIG. 8.

The terminal 1902 is configured to send a request message to the mobility management network element 1901, where the request message includes authentication reference information, and the authentication reference information is used by the mobility management network element to determine whether to perform third-party authentication on the terminal; and the terminal receives a response message from the mobility management network element in response to the request message. The mobility management network element 1901 receives the request message from the terminal 1902, where the request message is used to request access to a network; and the mobility management network element triggers third-party authentication when the mobility management network element determines, based on the request message, to perform third-party authentication on the terminal.

It should be understood that the mobility management network element 1901 in the communications system 1900 may perform the solution performed by the communications apparatus 1401 in FIG. 14, or may perform the solution performed by the communications apparatus 901 in FIG. 9. Optionally, the mobility management network element 1901 may be the AMF network element or the MME network element in FIG. 1. The mobility management network element 1901 in the communications system 1900 may perform the solution performed by the communications apparatus 1401 in FIG. 14, or may perform the solution performed by the communications apparatus 901 in FIG. 9. Optionally, the mobility management network element 1901 may be the AMF network element or the MME network element in FIG. 1. The terminal 1902 in the communications system 1900 may perform the solution performed by the communications apparatus 1501 in FIG. 15, or may perform the solution performed by the communications apparatus 1001 in FIG. 10. Optionally, the terminal 1902 may be the terminal in FIG. 1. The AUSF network element 1903 in the communications system 1900 may perform the solution performed by the communications apparatus 1601 in FIG. 16, or may perform the solution performed by the communications apparatus 1101 in FIG. 11. Optionally, the AUSF network element 1903 may be the AUSF network element in FIG. 1. The PCF network element 1904 in the communications system 1900 may perform the solution performed by the communications apparatus 1701 in FIG. 17, or may perform the solution performed by the communications apparatus 1201 in FIG. 12. Optionally, the PCF network element 1904 may be the PCF network element in FIG. 1. The SMF network element 1905 in the communications system 1900 may perform the solution performed by the communications apparatus 1801 in FIG. 18, or may perform the solution performed by the communications apparatus 1301 in FIG. 13. Optionally, the SMF network element 1905 may be the SMF network element in FIG. 1.

All or a part of the foregoing embodiments may be implemented through software, hardware, or any combination thereof. When being implemented through software program, all or a part of the embodiments may be implemented in a form of a computer program product. The computer program product includes one or more instructions. When the computer program instructions are loaded and executed on a computer, the procedure or functions according to the embodiments of this application are all or partially generated. The computer may be a general-purpose computer, a dedicated computer, a computer network, or other programmable apparatuses. The instructions may be stored in a computer storage medium or may be transmitted from a computer storage medium to another computer storage medium. For example, the instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer storage medium may be any usable medium accessible to the computer, or a data storage device, such as a server or a data center, integrating one or more usable media. The usable medium may be a magnetic medium (for example, a floppy disk, a hard disk, or a magnetic optical disc (MO)), an optical medium (for example, a CD, a DVD, a BD, or an HVD), a semiconductor medium (for example, a ROM, an EPROM, an EEPROM, a nonvolatile memory (NAND FLASH), or a solid-state disk (Solid State Disk, SSD)), or the like.

A person skilled in the art should understand that the embodiments of this application may be provided as a method, a system, or a computer program product. Therefore, the embodiments of this application may use a form of hardware only embodiments, software only embodiments, or embodiments with a combination of software and hardware. Moreover, the embodiments of this application may use a form of a computer program product that is implemented on one or more computer-usable storage media (including but not limited to a disk memory, a CD-ROM, an optical memory, and the like) that include computer-usable program code.

The embodiments of this application are described with reference to the flowcharts and/or block diagrams of the method, the device (system), and the computer program product according to the embodiments of this application. It should be understood that instructions may be used to implement each process and/or each block in the flowcharts and/or the block diagrams and a combination of a process and/or a block in the flowcharts and/or the block diagrams. These instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specified function in one or more processes in the flowcharts and/or in one or more blocks in the block diagrams.

These instructions may also be stored in a computer-readable memory that can instruct the computer or any other programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

These instructions may be loaded into the computer or another programmable data processing device, so that a series of operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

## Claims

1. A communication method, comprising:
receiving (S201), by a mobility management network element, a request message from a terminal, wherein the request message is used to request access to a network; and
triggering (S202), by the mobility management network element, third-party authentication when the mobility management network element determines, based on the request message, to perform third-party authentication on the terminal, wherein the determining comprises:
when the request message comprises indication information used to indicate to perform third-party authentication on the terminal, determining, by the mobility management network element, to perform third-party authentication on the terminal; or
when the request message comprises an application identifier, determining, by the mobility management network element, to perform third-party authentication on the terminal, wherein the application identifier is used to identify an application that performs third-party authentication; or
when the request message comprises an identifier of the terminal, and an authentication manner corresponding to the identifier of the terminal is performing third-party authentication on the terminal, determining, by the mobility management network element, to perform third-party authentication on the terminal, **characterized in that**:
the request message further comprises a user identifier and an application container, and the application container is used by an application server to perform the third-party authentication on the terminal,
wherein the user identifier is associated with the application server,
wherein the application container comprises a security challenge value generated by using a key, wherein if the application server successfully verifies the security challenge value corresponding to the user identifier, it is determined that third-party authentication on the terminal corresponding to the user identifier succeeds,
wherein if the application server fails to verify the security challenge value corresponding to the use identifier, it may be determined that the third-party authentication on the terminal corresponding to the user identifier fails.

2. The method according to claim 1, wherein the method further comprises:
sending, by the mobility management network element, a response message to the terminal based on the request message, wherein the response message comprises indication information used to indicate the terminal to send information by using a control plane; and
receiving, by the mobility management network element, a user identifier by using the control plane.

3. The method according to claim 1, wherein the determining, by the mobility management network element based on the request message, to perform third-party authentication on the terminal comprises:
when the request message comprises a user identifier, determining, by the mobility management network element, to perform third-party authentication on the terminal.

4. A communication method, comprising:
sending, by a terminal, a request message to a mobility management network element, wherein the request message comprises authentication reference information, and the authentication reference information is used by the mobility management network element to determine whether to perform third-party authentication on the terminal; and
receiving, by the terminal, a response message from the mobility management network element in response to the request message, wherein the authentication reference information comprises indication information or an application identifier used to indicate to perform third-party authentication on the terminal, wherein the application identifier is used to identify an application that performs third-party authentication,
wherein the request message further comprises a user identifier and an application container, and the application container is used by an application server to perform the third-party authentication on the terminal, wherein the user identifier is associated with the application server,
wherein the application container comprises a security challenge value generated by using a key, wherein if the application server successfully verifies the security challenge value corresponding to the user identifier, it is determined that the third-party authentication on the terminal corresponding to the user identifier succeeds,
wherein if the application server fails to verify the security challenge value corresponding to the user identifier, it may be determined that the third-party authentication on the terminal corresponding to the user identifier fails.

5. The method according to claim 4, wherein the response message comprises indication information used to indicate the terminal to send information by using a control plane, and the method further comprises:
sending, by the terminal, a user identifier to the mobility management network element by using the control plane.

6. A communications apparatus, comprising:
a memory storing program code; and
a processor in communication with the memory, the processor executing the program code to perform the method of any one of claims 1 to 5.

7. A computer readable medium having a program recorded thereon; wherein when the program is executed by a computer, the program causes the computer to execute the method of any one of claims 1 to 5

## Patentansprüche

1. Kommunikationsverfahren, das Folgendes umfasst:
Empfangen (S201), durch ein Mobilitätsmanagement-Netzwerkelement, einer Anforderungsnachricht von einem Endgerät, wobei die Anforderungsnachricht verwendet wird, um Zugang zu einem Netzwerk anzufordern; und
Auslösen (S202), durch das Mobilitätsmanagement-Netzwerkelement, einer Drittanbieter-Authentifizierung, wenn das Mobilitätsmanagement-Netzwerkelement basierend auf der Anforderungsnachricht bestimmt, eine Drittanbieter-Authentifizierung an dem Endgerät durchzuführen, wobei das Bestimmen Folgendes umfasst:
wenn die Anforderungsnachricht Angabeinformationen umfasst, die verwendet werden, um anzugeben, eine Drittanbieter-Authentifizierung an dem Endgerät durchzuführen, Bestimmen, durch das Mobilitätsmanagement-Netzwerkelement, eine Drittanbieter-Authentifizierung an dem Endgerät durchzuführen; oder
wenn die Anforderungsnachricht eine Anwendungskennung umfasst, Bestimmen, durch das Mobilitätsmanagement-Netzwerkelement, eine Drittanbieter-Authentifizierung an dem Endgerät durchzuführen, wobei die Anwendungskennung verwendet wird, um eine Anwendung zu identifizieren, die eine Drittanbieter-Authentifizierung durchführt; oder
wenn die Anforderungsnachricht eine Kennung des Endgeräts umfasst und eine der Kennung des Endgeräts entsprechende Authentifizierungsart eine Drittanbieter-Authentifizierung an dem Endgerät durchführt, Bestimmen, durch das Mobilitätsmanagement-Netzwerkelement, eine Drittanbieter-Authentifizierung an dem Endgerät durchzuführen, **dadurch gekennzeichnet, dass:**
die Anforderungsnachricht ferner eine Benutzerkennung und einen Anwendungscontainer umfasst, und der Anwendungscontainer durch einen Anwendungsserver verwendet wird,
um die Drittanbieter-Authentifizierung an dem Endgerät durchzuführen, wobei die Benutzerkennung dem Anwendungsserver zugeordnet ist,
wobei der Anwendungscontainer einen Sicherheitsabfragewert umfasst, der unter Verwendung eines Schlüssels erzeugt wird, wobei, falls der Anwendungsserver den der Benutzerkennung entsprechenden Sicherheitsabfragewert erfolgreich verifiziert,
bestimmt wird, dass die Drittanbieter-Authentifizierung an dem der Benutzerkennung entsprechenden Endgerät erfolgreich ist,
wobei, falls der Anwendungsserver daran scheitert, den der Benutzerkennung entsprechenden Sicherheitsabfragewert zu verifizieren, bestimmt werden kann, dass die Drittanbieter-Authentifizierung an dem der Benutzerkennung entsprechenden Endgerät scheitert.

2. Verfahren nach Anspruch 1, wobei das Verfahren ferner Folgendes umfasst:
Senden, durch das Mobilitätsmanagement-Netzwerkelement, einer Antwortnachricht an das Endgerät basierend auf der Anforderungsnachricht, wobei die Antwortnachricht Angabeinformationen umfasst, die verwendet werden, um dem Endgerät anzugeben, Informationen unter Verwendung einer Steuerungsebene zu senden; und
Empfangen, durch das Mobilitätsmanagement-Netzwerkelement, einer Benutzerkennung unter Verwendung der Steuerungsebene.

3. Verfahren nach Anspruch 1, wobei das Bestimmen, durch das Mobilitätsmanagement-Netzwerkelement basierend auf der Anforderungsnachricht, eine Drittanbieter-Authentifizierung an dem Endgerät durchzuführen, Folgendes umfasst:
wenn die Anforderungsnachricht eine Benutzerkennung umfasst, Bestimmen, durch das Mobilitätsmanagement-Netzwerkelement, eine Drittanbieter-Authentifizierung an dem Endgerät durchzuführen.

4. Kommunikationsverfahren, das Folgendes umfasst:
Senden, durch ein Endgerät, einer Anforderungsnachricht an ein Mobilitätsmanagement-Netzwerkelement, wobei die Anforderungsnachricht Authentifizierungsreferenzinformationen umfasst, und die
Authentifizierungsreferenzinformationen durch das Mobilitätsmanagement-Netzwerkelement verwendet werden, um zu bestimmen, ob eine Drittanbieter-Authentifizierung an dem Endgerät durchzuführen ist; und
Empfangen, durch das Endgerät, einer Antwortnachricht von dem Mobilitätsmanagement-Netzwerkelement als Antwort auf die Anforderungsnachricht, wobei die Authentifizierungsreferenzinformationen Angabeinformationen oder eine Anwendungskennung umfassen, die verwendet werden, um anzugeben, eine Drittanbieter-Authentifizierung an dem Endgerät durchzuführen, wobei die Anwendungskennung verwendet wird, um eine Anwendung zu identifizieren, die eine Drittanbieter-Authentifizierung durchführt,
wobei die Anforderungsnachricht ferner eine Benutzerkennung und einen Anwendungscontainer umfasst, und der Anwendungscontainer durch einen Anwendungsserver verwendet wird, um die Drittanbieter-Authentifizierung an dem Endgerät durchzuführen, wobei die Benutzerkennung dem Anwendungsserver zugeordnet ist,
wobei der Anwendungscontainer einen Sicherheitsabfragewert umfasst, der unter Verwendung eines Schlüssels erzeugt wird, wobei, falls der Anwendungsserver den der Benutzerkennung entsprechenden Sicherheitsabfragewert erfolgreich verifiziert, bestimmt wird, dass die Drittanbieter-Authentifizierung an dem der Benutzerkennung entsprechenden Endgerät erfolgreich ist, wobei, falls der Anwendungsserver daran scheitert, den der Benutzerkennung entsprechenden Sicherheitsabfragewert zu verifizieren, bestimmt werden kann, dass die Drittanbieter-Authentifizierung an dem der Benutzerkennung entsprechenden Endgerät scheitert.

5. Verfahren nach Anspruch 4, wobei die Antwortnachricht Angabeinformationen umfasst, die verwendet werden, um dem Endgerät anzugeben, Informationen unter Verwendung einer Steuerungsebene zu senden, und das Verfahren ferner Folgendes umfasst:
Senden, durch das Endgerät, einer Benutzerkennung an das Mobilitätsmanagement-Netzwerkelement unter Verwendung der Steuerungsebene.

6. Kommunikationseinrichtung, die Folgendes umfasst:
einen Speicher, der Programmcode speichert; und
einen Prozessor in Kommunikation mit dem Speicher, wobei der Prozessor den Programcode ausführt, um das Verfahren nach einem der Ansprüche 1 bis 5 durchzuführen.

7. Computerlesbares Medium, das ein darauf aufgezeichnetes Programm aufweist;
wobei das Programm, wenn das Programm durch einen Computer ausgeführt wird, den Computer veranlasst, das Verfahren nach einem der Ansprüche 1 bis 5 auszuführen.

## Revendications

1. Procédé de communication, comprenant :
la réception (S201), par un élément de réseau de gestion de mobilité, d'un message de demande en provenance d'un terminal, dans lequel le message de demande est utilisé pour demander un accès à un réseau ; et
le déclenchement (S202), par l'élément de réseau de gestion de mobilité, d'une authentification de tiers lorsque l'élément de réseau de gestion de mobilité détermine, sur la base du message de demande, de réaliser une authentification de tiers sur le terminal, dans lequel la détermination comprend :
lorsque le message de demande comprend des informations d'indication utilisées pour indiquer de réaliser une authentification de tiers sur le terminal, la détermination, par l'élément de réseau de gestion de mobilité, d'une réalisation d'une authentification de tiers sur le terminal ; ou
lorsque le message de demande comprend un identifiant d'application, la détermination, par l'élément de réseau de gestion de mobilité, d'une réalisation d'une authentification de tiers sur le terminal, dans lequel l'identifiant d'application est utilisé pour identifier une application qui réalise l'authentification de tiers ; ou
lorsque le message de demande comprend un identifiant du terminal et lorsqu'un mode d'authentification correspondant à l'identifiant du terminal réalise une authentification de tiers sur le terminal, la détermination, par l'élément de réseau de gestion de mobilité, d'une réalisation d'une authentification de tiers sur le terminal,
**caractérisé en ce que** :
le message de demande comprend en outre un identifiant d'utilisateur et un conteneur d'application, et le conteneur d'application est utilisé par un serveur d'application pour réaliser l'authentification de tiers sur le terminal, dans lequel l'identifiant d'utilisateur est associé au serveur d'application,
dans lequel le conteneur d'application comprend une valeur de défi de sécurité générée en utilisant une clé, dans lequel, si le serveur d'application vérifie avec succès la valeur de défi de sécurité correspondant à l'identifiant d'utilisateur, il est déterminé qu'une authentification de tiers sur le terminal correspondant à l'identifiant d'utilisateur est réussie,
dans lequel, si le serveur d'application ne parvient pas à vérifier la valeur de défi de sécurité correspondant à l'identifiant d'utilisateur, il peut être déterminé que l'authentification de tiers sur le terminal correspondant à l'identifiant d'utilisateur échoue.

2. Procédé selon la revendication 1, dans lequel le procédé comprend en outre :
l'envoi, par l'élément de réseau de gestion de mobilité, d'un message de réponse au terminal sur la base du message de demande, dans lequel le message de réponse comprend des informations d'indication utilisées pour indiquer au terminal d'envoyer des informations en utilisant un plan de commande ; et
la réception, par l'élément de réseau de gestion de mobilité, d'un identifiant d'utilisateur en utilisant le plan de commande.

3. Procédé selon la revendication 1, dans lequel la détermination, par l'élément de réseau de gestion de mobilité sur la base du message de demande, d'une réalisation d'une authentification de tiers sur le terminal comprend :
lorsque le message de demande comprend un identifiant d'utilisateur, déterminer, par l'élément de réseau de gestion de mobilité, de réaliser une authentification de tiers sur le terminal.

4. Procédé de communication, comprenant :
l'envoi, par un terminal, d'un message de demande à un élément de réseau de gestion de mobilité, dans lequel le message de demande comprend des informations de référence d'authentification, et les informations de référence d'authentification sont utilisées par l'élément de réseau de gestion de mobilité pour déterminer s'il convient de réaliser une authentification de tiers sur le terminal ; et
la réception, par le terminal, d'un message de réponse en provenance de l'élément de réseau de gestion de mobilité en réponse au message de demande, dans lequel les informations de référence d'authentification comprennent des informations d'indication ou un identifiant d'application utilisé pour indiquer de réaliser une authentification de tiers sur le terminal, dans lequel l'identifiant d'application est utilisé pour identifier une application qui réalise une authentification de tiers,
dans lequel le message de demande comprend en outre un identifiant d'utilisateur et un conteneur d'application, et le conteneur d'application est utilisé par un serveur d'application pour réaliser une authentification de tiers sur le terminal, dans lequel l'identifiant d'utilisateur est associé au serveur d'application,
dans lequel le conteneur d'application comprend une valeur de défi de sécurité générée en utilisant une clé, dans lequel, si le serveur d'application vérifie avec succès la valeur de défi de sécurité correspondant à l'identifiant d'utilisateur, il est déterminé que l'authentification de tiers sur le terminal correspondant à l'identifiant d'utilisateur est réussie, dans lequel, si le serveur d'application ne parvient pas à vérifier la valeur de défi de sécurité correspondant à l'identifiant d'utilisateur, il peut être déterminé que l'authentification de tiers sur le terminal correspondant à l'identifiant d'utilisateur échoue.

5. Procédé selon la revendication 4, dans lequel le message de réponse comprend des informations d'indication utilisées pour indiquer au terminal d'envoyer des informations en utilisant un plan de commande, et le procédé comprend en outre :
l'envoi, par le terminal, d'un identifiant d'utilisateur à l'élément de réseau de gestion de mobilité en utilisant le plan de commande.

6. Appareil de communications, comprenant :
une mémoire stockant un code de programme ; et
un processeur en communication avec la mémoire, le processeur exécutant le code de programme pour réaliser le procédé selon l'une quelconque des revendications 1 à 5.

7. Support lisible par ordinateur sur lequel est enregistré un programme ; dans lequel,
lorsque le programme est exécuté par un ordinateur, le programme amène l'ordinateur à exécuter le procédé selon l'une quelconque des revendications 1 à 5.
